# EUROPÄISCHE PATENTSCHRIFT

(11) **EP 3 765 170 B1**
(45) Veröffentlichungstag und Bekanntmachung des Hinweises auf die Patenterteilung: **10.01.2024**
(21) Anmeldenummer: 19713685.6
(22) Anmeldetag: 12.03.2019
(51) Int. Cl.: B01D 45/08, B01D 45/16, B05B 14/43

(54) **ABSCHEIDEEINHEIT MIT ABSCHLAGFÄCHE**
SEPARATOR WITH IMPINGEMENT BAFFLE
SEPARATEUR AVEC DÉFLECTEUR D'IMPACT

(30) Priorität: 15.03.2018 DE 102018105977; 09.07.2018 DE 102018116526
(43) Veröffentlichungstag der Anmeldung: 20.01.2021
(73) Patentinhaber: Dürr Systems AG, 74321 Bietigheim-Bissingen (DE)
(72) Erfinder: SEYBOTH, Oliver, 71282 Hemmingen (DE); NEU, Andreas, 70825 Korntal-Münchingen (DE)
(74) Vertreter: RPK Patentanwälte Reinhardt und Kaufmann Partnerschaft mbB
(86) Internationale Anmeldenummer: PCT/DE2019/100217
(87) Internationale Veröffentlichungsnummer: WO 2019/174674

(56) Entgegenhaltungen:
- EP-A1- 3 034 150
- WO-A1-91/17813
- DE-A1- 3 521 927
- DE-U1- 8 406 088
- GB-A- 2 495 904
- US-A- 5 352 257
- US-A1- 2003 136 095
- US-B1- 6 454 825

## Beschreibung

### Stand der Technik

Die Erfindung betrifft eine Abscheidestufe zur Trägheitsabscheidung von in einem durchströmenden Fluid enthaltenen Komponenten, insbesondere Lackpartikel und/oder Lackagglomerate sowie eine Abscheideeinheit mit wenigstens einer solchen Abscheidestufe.

Trägheitsabscheider zur Abscheidung von Staubpartikeln oder Flüssigkeitströpfchen aus einem Gasstrom sind allgemein bekannt. Die Trägheitsabscheider sind in der Regel aus mehreren sehr einfach geformten Strömungskörpern, beispielsweise Rohrhalbschalen oder trapezförmig gebogenen Blechen, aufgebaut, die so im Gasstrom angeordnet sind, dass sie ein Strömungslabyrinth bilden.

Auch speziell für die Abscheidung von Lack-Overspray aus der Abluft bzw. Umluft von Lackieranlagen werden auf dem Markt bereits verschiedene Trägheitsabscheider angeboten. Dabei handelt es sich häufig um Einweg-Abscheideeinheiten, die z.B. aus Karton oder Kunststoff aufgebaut sind und als Ganzes entsorgt werden, sobald sie vollständig mit Lack beladen sind. Diese Einwegabscheider weisen standardmäßig äußere Abmessungen von ca. 500 × 500 × 500 mm bis zu ca. 1200 × 800 × 2000 mm auf. Sie finden sowohl im Industrielackierbereich als auch in der Automobilkarossenlackierung Anwendung. Da die bekannten Trägheitsabscheider nur eine begrenzte Abscheideeffizienz aufweisen, kommen zur Feinreinigung des Gasstroms in der Regel zusätzlich nachgeschaltete Filter zum Einsatz.

Die EP 3034150 A1 offenbart eine Einrichtung zur Sprühnebeltrennung von Heizungs-, Lüftungs- und Klimaanlagen.

In der WO 2013/013780 A1 ist beispielsweise eine Abscheidevorrichtung mit Filtereinheit offenbart, die als Trägheitsfilter ausgebildet ist. Die Abscheidevorrichtung umfasst eine Vielzahl von Abscheideelementen, die so angeordnet sind, dass ein Strömungslabyrinth ausgebildet ist. Die Abscheideelemente verlaufen vertikal und werden in horizontaler Richtung durchströmt, wobei der Abstand der Abscheideelemente zueinander in Durchströmungsrichtung kleiner wird. Als Abscheideelemente sind z.B. Filterlamellen, Filterhülsen, Fachstrukturen oder Kammerstrukturen vorhanden.

### Offenbarung der Erfindung

Die Aufgabe der Erfindung ist die Bereitstellung einer Abscheidestufe zur Trägheitsabscheidung mit einer gegenüber dem Stand der Technik verbesserten Abscheideeffizienz.

Eine weitere Aufgabe ist die Bereitstellung einer Abscheideeinheit mit wenigstens einer solchen Abscheidestufe.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht nach einem Aspekt der Erfindung von einer Abscheidestufe zur Trägheitsabscheidung von in einem durchströmenden Fluid enthaltenen Komponenten aus, insbesondere Lackpartikel und/oder Lackagglomerate.

Es wird vorgeschlagen, dass wenigstens ein Abscheidesegment vorgesehen ist, das eingangsseitig der Abscheidestufe wenigstens eine Beschleunigungsstrecke für das Fluid aufweist, in welcher das Fluid in einer Durchströmungsrichtung beschleunigt wird, und dass der Beschleunigungsstrecke eine erste Abschlagfläche für im Fluid enthaltene Komponenten nachgeschaltet ist. Der ersten Abschlagfläche ist eine zweite Abschlagfläche nachgeschaltet, welche eine Rückseite einer Begrenzungswand der Beschleunigungsstrecke ist.

Die Innenseite der Beschleunigungsstrecke dient zur Beschleunigung des Fluids und die Außenseite als gekrümmter Abschnitt der Beschleunigungsstrecke als zweite Abschlagfläche.

Die erste Abschlagfläche weist einen Prallbereich und einen in Strömungsrichtung folgenden gekrümmten Abschnitt zur Richtungsumlenkung des Fluids um mehr als270° zur Durchströmungsrichtung des Fluids in der Beschleunigungsstrecke auf.

Optional kann die erste Abschlagfläche entlang des gekrümmten Abschnitts durchgehend ausgebildet sein. Die Krümmung des gekrümmten Abschnitts ist konstant. Alternativ ist der Krümmungsradius entlang des gekrümmten Abschnitts veränderbar, insbesondere wird der Krümmungsradius kleiner.

Der gekrümmte Abschnitt kann glatt gerundet, mit einer durchgehenden Krümmung, gekrümmt sein. Optional kann der gekrümmte Abschnitt auch durch gerade Flächensegmente in Form eines Vielecks gebildet sein, wobei benachbarte Flächensegmente einen geeigneten Winkel miteinander einschließen.

Eine Endkante des gekrümmten Abschnitts der ersten Abschlagsfläche ist auf die zweite Abschlagfläche gerichtet.

Die Beschleunigungsstrecke ist als Düse mit einem großen freien Strömungsquerschnitt am Eintritt des Fluids in die Beschleunigungsstrecke ausgebildet, der sich in Durchströmungsrichtung verjüngt.

Vorteilhaft kann in der Abscheidestufe eine strömungstechnisch optimierte geometrische Struktur zur Trägheitsabscheidung realisiert werden, insbesondere die geometrische Struktur eines günstigen durchströmten labyrinthartigen Strömungspfades. Entlang einer Abschlagfläche, an der mit wesentlichen Lackanhaftungen zu rechnen ist, kann ein möglichst großer freier Strömungsquerschnitt bereitgestellt werden. Trotz des an sich prinzipiell bedingten Zielkonflikts von hoher Abscheideeffizienz und geringem Druckverlust kann durch eine strömungstechnisch optimierte Abscheidestruktur eine möglichst hohe Abscheideeffizienz bei möglichst geringem Druckverlust erreicht werden. Vorzugsweise ist die Abschlagfläche mit einem Prallabschnitt quer zum Ausgang der Beschleunigungsstrecke angeordnet.

Die Abscheidestufe kann ein einziges Abscheidesegment umfassen, welches eine Anströmfläche aufweist, von der sich die Beschleunigungsstrecke zur Abschlagfläche weg erstreckt. Die Abscheidestufe kann optional mehrere Abscheidesegmente umfassen. Optional können die Abscheidesegmente parallel anströmbar sein. Die Abscheidesegmente können miteinander fluchten. Optional können Abscheidesegmente auch gegeneinander so versetzt sein, dass ein oder mehrere Abscheidesegmente bezogen auf die Anströmrichtung des Fluids geometrisch hinter anderen Abscheidesegmenten angeordnet sind, alle Abscheidesegmente jedoch parallel anströmbar sind.

Ebenso kann optional durch eine geeignete und bedarfsangepasste Formgebung und Anordnung von Beschleunigungsstrecke und Abschlagfläche eine hohe Speicherkapazität für abgeschiedenen Lack erreicht werden. Dies ist gleichbedeutend mit einem durch zunehmende Lackbeladung nur geringfügig ansteigenden Durchströmungswiderstand der Abscheidestufe.

Insbesondere können der Abscheidestufe eine x-Achse, eine y-Achse und eine z-Achse zugeordnet sein, die jeweils senkrecht zueinander stehen.

Die Hauptdurchströmungsrichtung des Fluids in der Beschleunigungsstrecke ist als gedachte gerade Verbindung zwischen Eingangsseite und Ausgangsseite der Beschleunigungsstrecke zu verstehen, wobei die Strömung an der Eingangsseite in die Beschleunigungsstrecke eintritt und an der Ausgangsseite, welche der Eingangsseite gegenüberliegt, wieder austritt, unabhängig davon, ob im Innern der Beschleunigungsstrecke eine oder mehrere Richtungsumkehrungen erfolgen.

Die x-Achse entspricht der Hauptdurchströmungsrichtung.

Entlang der y-Achse ist der freie Strömungsquerschnitt am Eintritt des Fluids in die Beschleunigungsstrecke zwischen Anströmflächen der Abscheidestufe angeordnet.

Beispielsweise kann die x-Achse einer Längsachse der Beschleunigungsstrecke entsprechen, die z-Achse einer Hochachse und die y-Achse einer Querachse.

Günstigerweise ist die Beschleunigungsstrecke als Düse ausgebildet mit einem großen freien Strömungsquerschnitt am Eintritt des Fluids in die Beschleunigungsstrecke, der sich in Durchströmungsrichtung verjüngt. Der freie Strömungsquerschnitt am Eintritt des Fluids in die Beschleunigungsstrecke liegt parallel zu y-Achse und z-Achse.

Günstigerweise ist die Beschleunigungsstrecke rechteckig ausgebildet.

Insbesondere ist der freie Strömungsquerschnitt am Eintritt des Fluids in die Beschleunigungsstrecke rechteckig ausgebildet.

Der freie Strömungsquerschnitt am Eintritt in die Beschleunigungsstrecke ist in Richtung der z-Achse mindestens gleich groß, bevorzugt 1,5 mal so groß, besonders bevorzugt mindestens doppelt so groß wie in Richtung der y-Achse.

Günstig ist eine Realisierung der Abscheidestufe als Einwegabscheider, der vorzugsweise aus brennbarem Recyclingmaterial hergestellt ist.

Wegen der verbesserten Abscheideeffizienz kann optional auf nachgeschaltete Filterstufen mit Tiefenfiltern zur Erreichung der typischen Reingasanforderungen verzichtet werden.

Optional können derartige nachgeschaltete Filterstufen jedoch vorgesehen sein, mit dem Vorteil, dass durch die verbesserte Abscheideeffizienz deren Beladung im Betrieb verringert und deren Standzeit entsprechend verlängert ist.

Die Beschleunigungsstrecke in der erfindungsgemäßen Abscheidestufe bewirkt eine zielgerichtete Beschleunigung der im Gasstrom enthaltenen Partikel in Richtung auf die Abschlagfläche hin. Vielfache und scharfe Strömungsumlenkungen können vermieden werden, welche bei bekannten Trägheitsabscheidern zu einem ungünstigen Verhältnis der Abscheideeffizienz zum Durchströmungsdruckverlust führen können. Bekannte Trägheitsabscheider mit ebenen oder konvexen Abschlagflächen weisen generell eine geringe Abscheideeffizienz auf, da Partikel, die nicht unmittelbar beim Aufprall der Strömung auf die Abschlagflächen abgeschieden wurden, diese Abschlagfläche anschließend leicht passieren können, ohne damit in Kontakt zu kommen. An solchen Abschlagflächen abgeschiedene Lackpartikel/Agglomerate können zudem durch die Überströmung leicht wieder abgelöst und mitgerissen werden. Dies kann bei der erfindungsgemäßen Abscheidestufe vermieden werden.

Die Abscheidestufe besteht aus wenigstens einer geometrischen Struktur, die eine Beschleunigung des hindurchströmenden Gas-/Lacknebelgemisches auf ein lokales Maximum in Richtung auf die Abschlagfläche hin sowie eine anschließende Umlenkung der Strömung um mehr als 270°, bewirkt, um die Trägheitskräfte und/oder Fliehkräfte zur Abscheidung der Partikel auf der Abschlagfläche zu nutzen.

Die geometrische Struktur erlaubt es, hohe Strömungsgeschwindigkeiten und Beschleunigungen nur dort zu erzeugen, wo sie für die Abscheidung gebraucht werden. Vorteilhaft sind nur wenige Strömungsumlenkungen notwendig. Strömungsumlenkungen, die nicht unmittelbar der Beschleunigung in Richtung einer Abschlagfläche dienen, können möglichst druckverlustarm geführt werden. Um die bei Strömungsumlenkungen auftretenden Fliehkräfte zur Partikelabscheidung zu nutzen, ist entlang des Außenradius des gekrümmten Abschnitts der Abschlagfläche diese durchgängig ausgebildet. Entlang der Abschlagflächen, an denen mit wesentlichen Lackanhaftungen zu rechnen ist, können möglichst große freie Strömungsquerschnitte vorgesehen sein.

Nach einer günstigen Ausgestaltung der Abscheidestufe kann der Prallbereich dem austrittseitigen Ende der Beschleunigungsstrecke gegenüberliegen und ein Abstand zwischen austrittseitigem Ende und Prallbereich mindestens die Hälfte einer Breite der Beschleunigungsstrecke im engsten Querschnitt betragen. Es zeigt sich, dass ein geringerer Abstand den Druckverlust erhöhen und die Abschlagfläche schnell durch abgeschiedenen Lack zugesetzt würde.

Als Abstand wird der größte Abstand vom engsten Querschnitt der Beschleunigungsstrecke zum Prallbereich definiert.

Der Prallbereich ist vorzugsweise mindestens die Hälfte der lichten Breite des engsten Querschnitts der Beschleunigungsstrecke vom selbigen entfernt.

Bevorzugt kann der Prallbereich aufgrund der Stabilität und eines reduzierten Druckverlustes rund ausgeführt sein, insbesondere konkav bezogen auf den Ausgang der Beschleunigungsstrecke. Der gegenüber der Beschleunigungsstrecke liegende Bereich des Prallbereichs weist dann eine Spitze auf, die gegen die Strömung gerichtet ist.

Alternativ kann der Prallbereich eben ausgeführt sein. Der Prallbereich kann insbesondere senkrecht zur Durchströmungsrichtung der Beschleunigungsstrecke angeordnet sein. Das Fluid trifft, aus der Beschleunigungsstrecke kommend, auf den Prallbereich und wird zum gekrümmten Abschnitt der Abschlagfläche hin umgelenkt.

Vorteilhaft kann der Abstand zwischen Austrittsöffnung der Beschleunigungsstrecke und Prallbereich passend zu üblichen Betriebsbedingungen, denen die Abscheidestufe ausgesetzt ist, gewählt werden. Bei zu dicht hinter der Beschleunigungsstrecke angeordneten Abschlagflächen ist die Aufnahmekapazität gering, da der freie Strömungsquerschnitt über der Abschlagfläche schnell durch abgeschiedenen Lack verstopft wird.

Bei zu großem Abstand lässt die Abscheidewirkung nach, da den Partikeln ausreichend Zeit bleibt, den Stromlinien der Fluidströmung entlang des Prallbereichs und des gekrümmten Abschnitts der Abschlagflächen zu folgen.

Vorteilhaft kann die Beschleunigungsstrecke so ausgebildet sein, dass eine mittlere Geschwindigkeit des Fluids am engsten Querschnitt der Beschleunigungsstrecke im Bereich von 5 m/s bis 20 m/s liegt. Sollen möglichst hohe Abscheidegrade erzielt werden, haben sich Geschwindigkeiten von ca. 15 m/s als vorteilhaft erwiesen. Soll hingegen eine Grobabscheidung bei möglichst geringem Druckverlust stattfinden, haben sich Geschwindigkeiten von ca. 10 m/s als vorteilhaft erwiesen.

Nach einer günstigen Ausgestaltung der Abscheidestufe kann ein Verhältnis einer freien Einströmfläche im engsten Querschnitt der Beschleunigungsstrecke zur Querschnittsfläche vor der Beschleunigungsstrecke im Bereich von 1:4 bis 1:10 liegen, insbesondere im Bereich von 1:6 bis 1:8 liegen. Als Querschnittsfläche ist die Querschnittsfläche des Abscheidesegments senkrecht zu einer Hauptdurchströmungsrichtung zu verstehen. Insbesondere kann die Querschnittsfläche vor der Beschleunigungsstrecke der freie Strömungsquerschnitts am Eintritt des Fluids in die Beschleunigungsstrecke sein.

Dies ergibt eine günstige Abscheideeffizienz bei relativ geringem Druckverlust. Diese Querschnittsfläche wird im Folgenden auch als Anströmfläche bezeichnet. Weist die Abscheidestufe mehrere parallel anströmbare Abscheidesegmente auf, ist die Anströmfläche die Summe der Querschnittsflächen der Abscheidesegmente.

Die Hauptdurchströmungsrichtung ist als gedachte gerade Verbindung zwischen Eingangsseite und Ausgangsseite der Abscheidestufe zu verstehen, wobei die Strömung an der Eingangsseite in die Abscheidestufe eintritt und an der Ausgangsseite, welche vorzugsweise der Eingangsseite gegenüberliegt, wieder austritt, unabhängig davon, ob im Innern der Abscheidestufe eine oder mehrere Richtungsumkehrungen erfolgen.

Nach einer günstigen Ausgestaltung der Abscheidestufe kann ein Verhältnis einer Breite zu einer Tiefe der Abschlagfläche mindestens bei 1:2 liegen, vorzugsweise zwischen 1:2 und 3:1, besonders bevorzugt bei 2:1. Die Tiefe der Abschlagfläche ist die größte Entfernung vom Prallbereich zur höchsten Erhebung des gekrümmten Abschnitts der Abschlagfläche. Als Breite ist die lichte Breite der Abschlagfläche senkrecht zur Durchströmungsrichtung der Beschleunigungsstrecke zu verstehen.

Nach einer günstigen Ausgestaltung der Abscheidestufe kann der ersten Abschlagfläche eine zweite Abschlagfläche nachgeschaltet sein. Optional kann die zweite Abschlagfläche einen gekrümmten Abschnitt zur weiteren Richtungsablenkung des Fluids aufweisen. Optional kann der gekrümmte Abschnitt der zweiten Abschlagfläche eine dem ersten gekrümmten Abschnitt entgegengesetzte Krümmung aufweisen. Es erfolgt eine Rückumlenkung der Strömung des Fluids um mehr als 270° in der der ersten Umlenkung entgegengesetzten Lenkrichtung bis zurück in Einströmrichtung. Die Rückumlenkung in entgegengesetzter Lenkrichtung erhöht vorteilhaft die Abscheideeffizienz, da Partikel, die die erste Umlenkung fern der ersten Abschlagfläche passiert haben, sich so bei der Rückumlenkung nah an der die Rückumlenkung führenden Außenwandung befinden, die als zweite Abschlagfläche dient und sich leicht dort anlagern können.

Vorteilhaft kann die zweite Abschlagfläche eine Außenwandung der Abscheidestufe zur Führung des Fluids sein. Insbesondere kann die zweite Abschlagfläche eine Rückseite einer Begrenzungswand der Beschleunigungsstrecke sein. Dies erlaubt eine kompakte Bauweise mit wenigen Komponenten, da verschiedene Bereiche derselben Komponente unterschiedlich genutzt werden können. Beispielsweise dient die Innenseite der Beschleunigungsstrecke zur Beschleunigung eines Fluids und die Außenseite der Beschleunigungsstrecke als zweite Abschlagfläche, insbesondere als deren gekrümmter Abschnitt.

Insbesondere kann alternativ oder zusätzlich strömungsmäßig nach der zweiten Abschlagfläche eine Wandung quer zur Überströmungsrichtung am Ende des gekrümmten Abschnitts angeordnet sein. Diese Wandung dient als zusätzliche Abschlagfläche zur Ausnutzung der bei der Umlenkung auf die Partikel wirkenden Fliehkräfte.

Bei der Rückumlenkung von Teilströmen der benachbarten ersten Abschlagflächen stellt diese durchgängige Wandung eine Trennwand zwischen aufeinander zu gerichteten Teilströmen von benachbarten Abscheidesegmenten der Abscheidestufe dar. Die Teilströme zweier benachbarter Abscheidesegmente strömen auf die gemeinsame Trennwand und somit auch aufeinander zu, bevor sie weiter abgelenkt werden und zu beiden Seiten der Trennwand parallel in Richtung Ausgang der Abscheidestufe weiterströmen.

Vorteilhaft kann an der zweiten Abschlagfläche eine Rückumlenkung der Strömung des Fluids in einer Umlenkrichtung erfolgen, welche der Umlenkung an der ersten Abschlagfläche entgegengesetzt ist.

Nach einer günstigen Ausgestaltung der Abscheidestufe kann das Fluid am Prallbereich der Abschlagfläche in Teilströme mit unterschiedlicher Umlenkrichtung aufteilbar sein. Insbesondere können die Teilströme mit unterschiedlicher Umlenkrichtung aufteilbar sein. Ist die Beschleunigungsstrecke an ihrem austrittseitigen Ende beispielsweise rechteckig oder länglich ausgebildet, kann ein Teil des Fluidstroms zur einen Seite und der andere Teil des Fluidstroms zur gegenüberliegenden Seite umgelenkt werden. Dabei kann nach dem Aufprall eine, vorzugsweise symmetrische, Aufteilung des durch die Beschleunigungsstrecke eintretenden Fluidstroms in Teilströme mit unterschiedlicher, vorzugsweise entgegengesetzter, Umlenkrichtung erfolgen.

Nach einer günstigen Ausgestaltung der Abscheidestufe kann der gekrümmte Abschnitt der ersten Abschlagfläche ausgangsseitig einen Innenradius aufweisen, der mindestens ein Viertel einer Breite eines freien Strömungsquerschnitts am ausgangsseitigen Ende des gekrümmten Abschnitts ist. Dies ist besonders bei Umlenkungen des Fluidstroms um mehr als 90° vorteilhaft, um den Druckverlust zu minimieren.

Um eine signifikante Reduktion des Druckverlusts zu erreichen, kann der Innenradius wenigstens die Hälfte der Breite des freien Strömungsquerschnitts betragen. Der freie Strömungsquerschnitt ist der kleinste Strömungsquerschnitt zwischen Innenradius und zweiter Abschlagfläche oder der Begrenzungswand/Trennwand.

Nach einer günstigen Ausgestaltung der Abscheidestufe können an einer oder mehreren überströmten Innenradien und/oder an einer oder mehreren Endkanten überströmter Wandungen ein oder mehrere Fangbereiche angeordnet sein, welche zur Überströmungsrichtung hin geöffnet sein können und/oder es können Oberflächen überströmter Wandungen eine dreidimensionale Struktur, vorzugsweise eine Wellenstruktur, und/oder eine oder mehrere Vertiefungen und/oder eine erhöhte Rauigkeit, aufweisen. Derartige Strukturen erlauben es, einen Mitriss von bereits auf der Abschlagfläche abgeschiedener Lackpartikeln oder Agglomeraten zu verhindern. Hierdurch kann die Abscheideeffizienz weiter erhöht werden.

Nach einer günstigen Ausgestaltung der Abscheidestufe können Abschlagfläche und/oder Beschleunigungsstrecke aus Karton und/oder Wellpappe und/oder Faserformteilen und/oder Kunststoff-Tiefziehteilen gebildet sein. Auf diese Weise können Zuschnitte bereitgestellt werden, die herstellungsbedingt hinterschneidungsfrei geformt und daher gut stapelbar sind. Ein einfacher Aufbau aus möglichst wenigen, kompakt zu transportierenden Bauteilen ist möglich. Dies wiederum ermöglicht geringe Transportkosten, ein geringes Lagervolumen und einen schnellen Zusammenbau der Abscheidestufe vor Ort. Insbesondere können mehrere Abscheidestufen zu einer Abscheidereinheit zusammengesetzt werden.

Vorteilhaft ist die flexible Anpassbarkeit der Abscheidestufe an spezielle, insbesondere rheologische, Eigenschaften des zu behandelnden Fluidstroms, insbesondere eines daraus abzuscheidenden so genannten Oversprays in einer Lackieranlage, unter Verwendung einer möglichst geringen Anzahl unterschiedlicher Bauteile. Vorteilhaft können Bauteile der Abscheidestufe als Bausatz verfügbar gemacht werden.

Nach einer günstigen Ausgestaltung der Abscheidestufe können wenigstens zwei parallel durchströmte Abscheidesegmente vorgesehen sein, deren jeweilige Beschleunigungsstrecken und erste Abschlagflächen durch eine Wandung voneinander separiert sind.

Vorteilhaft kann jedes Abscheidesegment der Abscheidestufe eine geometrische Struktur umfassen oder aus einer solchen bestehen, die einmalig oder mehrmalig eine Beschleunigung des hindurchströmenden Fluids, insbesondere eines Gas-Lacknebelgemisches, auf ein lokales Maximum in Richtung auf eine Abschlagfläche hin sowie eine anschließende Umlenkung der Fluidströmung um mehr als 270°, bewirkt, um die Trägheitskräfte bzw. Fliehkräfte zur Abscheidung der Partikel aus der Fluidströmung auf der Abschlagfläche zu nutzen. Die geometrische Struktur erlaubt es, hohe Strömungsgeschwindigkeiten und Beschleunigungen gezielt und lokal nur dort zu erzeugen, wo sie für die Abscheidung gebraucht werden. Dabei brauchen nur wenige Strömungsumlenkungen erzeugt werden. Strömungsumlenkungen, die nicht unmittelbar der Beschleunigung in Richtung einer Abschlagfläche dienen, können möglichst druckverlustarm geführt werden. Entlang der Abschlagflächen, an denen mit wesentlichen Lackanhaftungen zu rechnen ist, können möglichst große freie Strömungsquerschnitte vorgesehen werden.

Jede Abscheidestufe kann sich mittels ihrer geometrische Struktur durch eine bestimmte Abscheideeffizienz und eine bestimmte Aufnahmekapazität für Partikel, insbesondere Lackpartikel, auszeichnen, die jedoch je nach Prozessbedingungen, definiert unter anderem durch die Zusammensetzung und Eigenschaften des Fluids, wie etwa Art des Lacks, Tropfengrößenverteilung, Luftkonditionen, Lackierprozess, unterschiedlich sein können.

Nach einem weiteren Aspekt der Erfindung wird eine Abscheideeinheit vorgeschlagen mit wenigstens einer erfindungsgemäßen Abscheidestufe. Die wenigstens eine Abscheidestufe der Abscheideeinheit ist in einem Gehäuse angeordnet.

Vorteilhaft ergibt sich durch das Gehäuse ein einfacher, leicht zu standardisierender Aufbau, der ein leichtes Austauschen von verbrauchten Abscheidestufen erlaubt, indem einfach das Gehäuse mit den einen oder mehreren Abscheidestufen entfernt und durch ein Gehäuse mit unverbrauchten Abscheidestufen ersetzt wird.

Nach einer günstigen Ausgestaltung der Abscheideeinheit können mehrere Abscheidestufen strömungsmäßig parallel und/oder in Serie durchströmbar angeordnet sein.

Nach einer günstigen Ausgestaltung der Abscheideeinheit kann vor oder im freien Strömungsquerschnitt der Beschleunigungsstrecke ein Leitelement angeordnet sein. Das Leitelement kann zur Geräuschminimierung bei der Durchströmung der Abscheideeinheit dienen. Dies ist besonders günstig bei Abscheideeinheiten, die noch nicht stark beladen sind.

Vorteilhaft kann das Leitelement lösbar von der Abscheideeinheit vorgesehen sein. Auf diese Weise kann das Leitelement aus der Abscheideeinheit entfernt werden, um bei längerem Gebrauch die Kapazität der Abscheideeinheit besser zu nutzen.

Das Leitelement kann die Durchströmung so beeinflussen, dass eine Geräuschentwicklung reduziert oder weitgehend unterdrückt werden kann.

Durch geeignete Positionierung und/oder Formgebung des Leitelements kann dieses günstigerweise eine Verwirbelung des einströmenden Fluids, beispielsweise einströmender Luft, und/oder eine Reflexion des hinter der Beschleunigungsstrecke entstehenden Schalls hervorrufen.

Nach einer günstigen Ausgestaltung der Abscheideeinheit kann das Leitelement sich parallel zur Anströmfläche der Abscheidestufe erstrecken und/oder das Leitelement kann in einer Symmetrieebene des freien Strömungsquerschnitts angeordnet sein. Das Leitelement kann im Querschnitt eben, gewinkelt oder gekrümmt ausgebildet sein. Ein gewinkelter oder gewölbter Querschnitt erhöht die Stabilität des Leitelements.

Vorteilhaft kann das Leitelement entgegen der Anströmrichtung spitz zulaufen oder konvex gewölbt sein. Diese Formgebung ist günstig für einen geringen Strömungswiderstand des Leitelements.

Optional kann das Leitelement als einteiliges Zusatzelement vorgesehen sein, das beim Aufbau der Abscheidestufe oder Abscheideeinheit hinzugefügt oder bedarfsweise weggelassen werden kann.

Nach einer günstigen Ausgestaltung der Abscheideeinheit kann das Gehäuse auf seiner Anströmseite eine Öffnung mit einem oberen und einem unteren Rand aufweisen, wobei die Ränder in ihrer Höhe unterschiedlich ausgebildet sind.

Durch den erhöhten Rand am unteren Bereich des Gehäuses kann ein Reservoir bereitgestellt werden, um aus dem Fluid abgetrennte Komponenten, etwa Lackreste, aufzufangen.

Eine günstige Höhe des unteren Randes des Gehäuses ist wenigstens 1,5 mal, vorzugsweise doppelt so groß wie eine Höhe des gegenüberliegenden oberen Randes des Gehäuses.

Bei Abmessungen des Gehäuses mit Kantenlängen von etwa 500 mm ist eine Höhe des oberen Randes zwischen 20 mm und 40 mm günstig und eine Höhe des unteren Randes zwischen 40 mm und 100 mm, vorzugsweise zwischen 50 mm und 80 mm.

Nach einer günstigen Ausgestaltung der Abscheideeinheit kann wenigstens eine Filterstufe, insbesondere eine als Tiefenfilter ausgebildete Filterstufe, für den Fluidstrom stromab wenigstens einer der Abscheidestufen angeordnet sein, insbesondere nach der letzten Abscheidestufe. Die Filterstufe kann vorteilhaft zur Feinreinigung des Fluids vorgesehen sein. Die Abscheideeinheit kann für verschiedene Anwendungsfälle, beispielsweise abhängig von einem erforderlichen Abscheidegrad und/oder zu behandelnden Volumenstrom und/oder Prozessbedingungen angepasst werden, indem aus einem Sortiment geeigneter Abscheidestufen und Teile ausgewählt und in geeigneter Reihenfolge nebeneinander und/oder hintereinander angeordnet werden.

Nach einer günstigen Ausgestaltung der Abscheideeinheit kann die wenigstens eine Filterstufe einen gefalteten Filterbalg aufweisen, dessen Faltenkanten quer zu einer sich in Richtung der z-Achse erstreckenden Ausdehnung der Beschleunigungsstrecke orientiert sind.

Die Faltenkanten erstrecken sich vorzugsweise in Richtung der y-Achse der Abscheidestufe.

Dies erlaubt eine Vergleichmäßigung des aus der Abscheidestufe oder den Abscheidestufen ausströmenden Fluids auf zumindest einen Teil der Filterfläche der Filterstufe. Vorzugsweise erlaubt dies eine Vergleichmäßigung des aus der Abscheidestufe oder den Abscheidestufen ausströmenden Fluids auf die gesamte Filterfläche der Filterstufe. Die Beschleunigungsstrecke hat beispielsweise die Form eines langgestreckten, insbesondere schlitzartigen, Trichters.

Optional kann die Filterstufe in einem gemeinsamen Gehäuse mit einer oder mehreren Abscheidestufen vorgesehen sein.

Günstigerweise kann die Filterstufe eine Filterklasse G2 aufweisen. Filterklasse G2 bedeutet, dass die Filterstufe einen mittleren Abscheidegrad von 65%-80% für Partikel < 10 µm aufweist.

Günstig sind Farbnebelabscheider aus Glasfasermaterial oder Filtermatten aus Polyestervlies als Material für den Filterbalg.

Die Wellenform des gefalteten Filterbalgs kann optional durch eine Stützstruktur im Gehäuse stabilisiert werden.

Nach einer günstigen Ausgestaltung der Abscheideeinheit können die wenigstens eine Abscheidestufe und eine oder mehrere Filterstufen in einem gemeinsamen Gehäuse angeordnet sein. Das Gehäuse kann ebenso wie die Bauteile der Abscheidestufen aus einem Zuschnitt aus geeignetem Material bestehen, beispielsweise Karton, und passend gefaltet werden. Beispielsweise kann aus nur drei Grundelementen, etwa einem Bauteil für Anströmfläche mit Beschleunigungsstrecke, einem Bauteil mit Abschlagflächen und einem Bauteil mit Stützrahmen, eine mehrstufige Abscheideeinheit mit einer Vielzahl von Abscheidestufen gefertigt werden.

Nach einer günstigen Ausgestaltung können Abscheideeinheiten und Filterstufen in Durchströmungsrichtung hintereinander in Reihe geschaltet sein. Vorgeschaltete Abscheideeinheiten und nachgeschaltete Filterstufen können in separaten Gehäusen angeordnet sein, die strömungsmäßig verbunden sind.

Die vorgeschalteten Abscheideeinheiten können als Grobabscheider 70% bis 95% der im Fluid enthaltenen Komponenten, insbesondere Lackreste, entfernen, und das Fluid dann durch eine nachgeschaltete Filterstufe mit einem Filtermaterial der Filterklasse G2 oder dergleichen, weiter gereinigt werden.

Optional kann eine separate vorgeschaltete Abscheideeinheit hintereinander angeordnet eine oder mehrere Abscheidestufen und eine oder mehrere Filterstufen in einem Gehäuse aufweisen.

Vorteilhaft können aufeinander folgende Gehäuse fluiddicht miteinander verbunden sein. Für eine praktische Anwendung kann ein Abkleben der Verbindungsstelle mit einem dichten Klebstreifen ausreichend sein.

Nach einer günstigen Ausgestaltung der Abscheideeinheit kann ein Bodenteil und/oder Deckelteil eine Negativkontur aufweisen, die den Wandungen eines zu durchströmenden Querschnitts einer oder mehrerer Abscheidestufen entspricht und die als Halterung für die eine oder mehrere Abscheidestufen dient. Die Negativkontur kann z.B. durch Vertiefungen, Haltenoppen und dergleichen in Form des zu durchströmenden horizontalen Querschnitts der Abscheidestufen vorgegeben sein. In diese Negativkonturen können die Bauteile für die Wandungen und/oder Beschleunigungsstrecken und/oder Abschlagflächen einfach eingesteckt und in Form gehalten werden.

Die Negativkontur kann auf einer Innenseite von Bodenteil und/oder Deckelteil angeordnet sein. Die Negativkontur kann durch Vertiefungen, Haltenoppen, o.ä. vorgegeben sein in welche die Bauteile eingesteckt werden können.

Optional kann die Negativkontur als unterbrochene Öffnungen im Bodenteil und/oder Deckelteil ausgebildet sein, durch welche die Bauteile durchgesteckt werden können.

Nach einem weiteren Aspekt der Erfindung wird ein Bausatz vorgeschlagen zur Herstellung einer erfindungsgemäßen Abscheideeinheit. Bauteile sind aus Zuschnitten aus Karton und/oder Wellpappe und/oder Faserformteilen und/oder Tiefziehteilen aus Kunststoff gebildet, die in eine Endform biegbar oder knickbar sind und/oder ineinander steckbar sind.

Nach einer günstigen Ausgestaltung des Bausatzes kann ein Bodenteil und/oder Deckelteil eine Negativkontur in Form eines zu durchströmenden Querschnitts einer oder mehrerer Abscheidestufen als Halterung für die Abscheidestufen aufweisen.

Günstigerweise kann der Bausatz ausschließlich aus Zuschnitten aus Karton oder Wellpappe bestehen, umfassend je ein Bodenteil und ein Deckelteil, die identisch ausgebildet sein können, sowie aus mehreren Wandungsteilen bestehen.

Bodenteil und Deckenteil können zur Aufnahme der Wandungsteile Ausschnitte aufweisen, vorzugsweise in Form von Negativkonturen, welche die Form des zu durchströmenden horizontalen Querschnitts der Abscheidestruktur wie Anströmflächen, Beschleunigungsstrecken, Prallbereiche, Abschlagflächen und dergleichen, vollständig oder teilweise nachbilden. Diese Ausschnitte dienen sowohl der Fixierung als auch der Formgebung bzw. Formstabilisierung der Wandungsteile, die in diese eingesteckt werden.

Im Falle von unterbrochenen Negativkonturen weisen die Wandungsteile an ihren oberen und unteren Kanten, die mit dem Bodenteil bzw. dem Deckenteil verbunden werden, eine entsprechende Zahnung auf.

Vorteilhaft kann der Bausatz für eine Abscheidestufe und/oder eine Abscheideeinheit mehrere baugleiche Bauteile umfassen, womit der Logistikaufwand sowie Herstellungs- und Lagerhaltungskosten vermindert werden können. Die Abscheidestufe kann dabei aus mehreren, beispielsweise ein bis zehn, Bauteilen, aufgebaut sein, die jeweils als Flächenzuschnitte oder dreidimensional geformte Flächenkörper ausgeführt sind. Der Aufbau einer optionalen Filterstufe kann durch Faltung, durch Ineinanderstecken oder durch Hintereinanderanordnung der Bauteile oder durch eine Kombination dieser Maßnahmen erfolgen.

Vorteilhaft können die Flächenzuschnitte Knicklinien und/oder Falzlinien aufweisen, um die Formgebung beim Zusammenbau zu erleichtern. Gekrümmte Abschnitte sind dann in der Art von Vielecken ausgebildet.

Optional können zur Versteifung der Struktur, insbesondere zur Abstützung von stromaufwärts liegenden Wandungsteilen an stromabwärtsliegenden Wandungsteilen die Bauteile Ausbuchtungen (Abstandhalter) aufweisen.

Ein Bausatz aus Bauteilen kann optional so gestaltet sein, dass daraus alternativ mehrere verschiedene Abscheidestufen herstellbar sind. Bei den Bauteilen kann es sich vorzugsweise um Zuschnitte aus Karton oder Wellpappe und/oder Faserformteile und/oder Tiefziehteile aus Kunststoff handeln. Faserform- oder Tiefziehteile sind herstellungsbedingt hinterschneidungsfrei geformt und daher gut stapelbar. Sämtliche Bauteile können daher platzsparend transportiert werden.

Nach einem weiteren Aspekt der Erfindung wird ein Transportwagen mit wenigstens einer erfindungsgemäßen Abscheideeinheit vorgeschlagen. Der Transportwagen ist gekennzeichnet durch eine verfahrbare oder verschiebbare Ausgestaltung zum Ankoppeln an eine Beschichtungsanlage.

Nach einer günstigen Ausgestaltung des Transportwagens kann die wenigstens eine Abscheideeinheit austauschbar angeordnet vorgesehen sein. Vorteilhaft kann auch eine beladene Abscheideeinheit, die typischerweise ein hohes Gewicht aufweist, mit dem Transportwagen einfach entfernt werden. Dies gilt umso mehr, wenn mehrere Abscheideeinheiten im Transportwagen angeordnet sind, welche insgesamt ein hohes Gewicht aufweisen.

Nach einem weiteren Aspekt der Erfindung wird eine Beschichtungsanlage mit wenigstens einem erfindungsgemäßen Transportwagen vorgeschlagen. Wenigstens ein Transportwagen ist zur Bildung einer fluidführenden Verbindung zu einem Abluftkanal vorgesehen. Vorteilhaft kann der wenigstens eine Transportwagen von lacknebelhaltiger Abluft durchströmt werden.

Nach einer günstigen Ausgestaltung der Beschichtungsanlage kann eine Mehrzahl von Transportwagen parallel ankoppelbar vorgesehen sein. Es kann ein hoher Durchsatz an Fluid in der Beschichtungsanlage erreicht werden. Die beweglichen Transportwagen können vorteilhaft bei laufender Produktion in der Beschichtungsanlage ausgetauscht werden.

Nach einem weiteren Aspekt der Erfindung wird ein Verfahren zur Herstellung einer erfindungsgemäßen Abscheideeinheit vorgeschlagen mit wenigstens einer erfindungsgemäßem Abscheidestufe, wobei ein Bausatz aus Bauteilen bereitgestellt wird, insbesondere aus Zuschnitten aus Karton und/oder Wellpappe und/oder Faserformteilen und/oder Tiefziehteilen aus Kunststoff; Bauteile aus dem Bausatz entnommen werden; Bauteile zur Bildung wenigstens einer Anströmfläche, wenigstens einer Beschleunigungsstrecke und wenigstens einer Abschlagfläche geformt werden; die geformten Bauteile in eine entsprechende Negativform von Bodenteil und/oder Deckelteil gesteckt werden; der Zusammenbau aus der wenigstens einen Anströmfläche, der wenigstens einen Beschleunigungsstrecke und der wenigstens einen Abschlagfläche mit Bodenteil und Deckelteil in ein Gehäuse eingesetzt wird.

Nach einer günstigen Ausgestaltung des Verfahrens kann wenigstens eine Filterstufe, insbesondere ein Tiefenfilter, in Durchströmungsrichtung stromab der wenigstens einen Abscheidestufe in das Gehäuse eingesetzt werden.

Die Herstellung aus dem Bausatz erlaubt eine besonders Platz sparende Transportgröße der Abscheideeinheit, die sehr einfach vor Ort aufgebaut werden kann. Eine Platz sparende Lagerhaltung vor Ort ist möglich.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: einen Querschnitt durch eine Abscheidestufe bestehend aus einem Abscheidesegment nach einem Ausführungsbeispiel der Erfindung mit einer eingangsseitigen Beschleunigungsstrecke gefolgt von einer ersten Abschlagfläche mit Fluidstromumlenkung an einem gekrümmten Abschnitt und einer zweiten Abschlagfläche mit entgegengesetzter Fluidstromumlenkung an einem entgegengesetzt gekrümmten Abschnitt;
- Fig. 2: den Querschnitt aus Figur 1 mit Erläuterung verschiedener Kenngrößen;
- Fig. 3: einen Querschnitt durch eine Abscheidestufe bestehend aus einem Abscheidesegment nach einem weiteren Ausführungsbeispiel der Erfindung mit einer eingangsseitigen Beschleunigungsstrecke gefolgt von einer ersten Abschlagfläche mit Fluidstromumlenkung an einem gekrümmten Abschnitt mit zunehmender Krümmung entlang der Abschlagfläche und einer zweiten Abschlagfläche mit entgegengesetzter Fluidstromumlenkung an einem gekrümmten Abschnitt;
- Fig. 4: einen Querschnitt einer weiteren Abscheidestufe bestehend aus einem Abscheidesegment mit Erläuterung verschiedener Kenngrößen;
- Fig. 5: einen Querschnitt durch eine Abscheidestufe mit mehreren nebeneinander angeordneten und parallel durchströmbaren Abscheidesegmenten, mit einer Anströmfläche nach Figur 1 nach einem Ausführungsbeispiel der Erfindung;
- Fig. 6: einen Querschnitt durch eine Abscheidestufe mit mehreren nebeneinander angeordneten und parallel durchströmbaren Abscheidesegmenten mit gerundeter Endkante des gekrümmten Abschnitts nach einem weiteren Ausführungsbeispiel der Erfindung;
- Fig. 7: einen Querschnitt durch eine Abscheidestufe mit mehreren nebeneinander angeordneten und parallel durchströmbaren Abscheidesegmenten mit zur Fluidströmung hin geöffneten Fangtaschen nach einem weiteren Ausführungsbeispiel der Erfindung;
- Fig. 8: ein Detail einer Abscheidestufe, dargestellt ohne Außenwände, nach einem Ausführungsbeispiel der Erfindung mit Falzlinien;
- Fig. 9: eine isometrische Ansicht einer Abscheidestufe nach einem Ausführungsbeispiel der Erfindung;
- Fig. 10: in Explosionsdarstellung die Abscheidestufe aus Figur 9;
- Fig. 11: eine isometrische Ansicht einer Abscheidestufe nach einem Ausführungsbeispiel der Erfindung mit einem Leitelement vor dem freien Strömungsquerschnitt der Beschleunigungsstrecke;
- Fig. 12: einen Deckelteil oder Bodenteil eines Bausatzes zur Herstellung einer Abscheidestufe nach einem Ausführungsbeispiel der Erfindung;
- Fig. 13: ein Wandungsteil eines Bausatzes zur Herstellung einer Abscheidestufe nach einem Ausführungsbeispiel der Erfindung;
- Fig. 14: in Explosionsdarstellung einzelne Bauteile einer Abscheidestufe mit drei Abscheidesegmenten nach einem Ausführungsbeispiel der Erfindung;
- Fig. 15: ein Bauteil zur Bildung der ersten Abschlagflächen der Abscheidestufe nach Figur 14 in ungefaltetem Zustand;
- Fig. 16: einen Querschnitt der Abscheidestufe nach Figur 14;
- Fig. 17: die Abscheidestufe nach Figur 14 in zusammengebauter Form in isometrischer Darstellung;
- Fig. 18: in isometrischer Darstellung eine Abscheidestufe nach einem Ausführungsbeispiel der Erfindung mit in der Tiefe versetzt angeordneten, parallel angeströmten Abscheidesegmenten;
- Fig. 19: in Explosionsdarstellung die Abscheidestufe aus Figur 18;
- Fig. 20: einen Querschnitt der Abscheidestufe nach Figur 18;
- Fig. 21: in Explosionsdarstellung eine Abscheideeinheit nach einem Ausführungsbeispiel der Erfindung mit drei in Serie geschalteten Abscheidestufen mit zwei groben Abscheidestufen und einer feinen Abscheidestufe;
- Fig. 22: die Abscheideeinheit nach Figur 21 in einem Gehäuse in isometrischer Darstellung;
- Fig. 23: einen Querschnitt der Abscheidestufen der Abscheideeinheit nach Figur 22;
- Fig. 24: in Explosionsdarstellung eine Abscheideeinheit mit zwei Abscheidestufen und einer nachgeschalteten Filterstufe in Form eines Tiefenfilters nach einem Ausführungsbeispiel der Erfindung;
- Fig. 25: in isometrischer Darstellung die Abscheideeinheit aus Figur 24 in einem Gehäuse;
- Fig. 26: einen Querschnitt der Abscheideeinheit nach Figur 24;
- Fig. 27: in Explosionsdarstellung eine Abscheideeinheit mit zwei Abscheidestufen und einer nachgeschalteten Filterstufe in Form eines Tiefenfilters mit gefaltetem Filterbalg, dessen Faltenkanten quer zu einer z-Achse der Abscheidestufen orientiert sind, nach einem Ausführungsbeispiel der Erfindung;
- Fig. 28: in Explosionsdarstellung eine Abscheideeinheit mit einer Abscheidestufe und einer nachgeschalteten Filterstufe in Form eines Tiefenfilters mit gefaltetem Filterbalg, dessen Faltenkanten quer zu einer z-Achse der Abscheidestufe orientiert sind, nach einem Ausführungsbeispiel der Erfindung;
- Fig. 29: eine isometrische Ansicht eines Transportwagens, in dem eine Mehrzahl von austauschbaren Abscheideeinheiten eingesetzt sind;
- Fig. 30: eine schematische Ansicht einer Beschichtungsanlage mit mehreren Transportwagen nach Figur 29.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

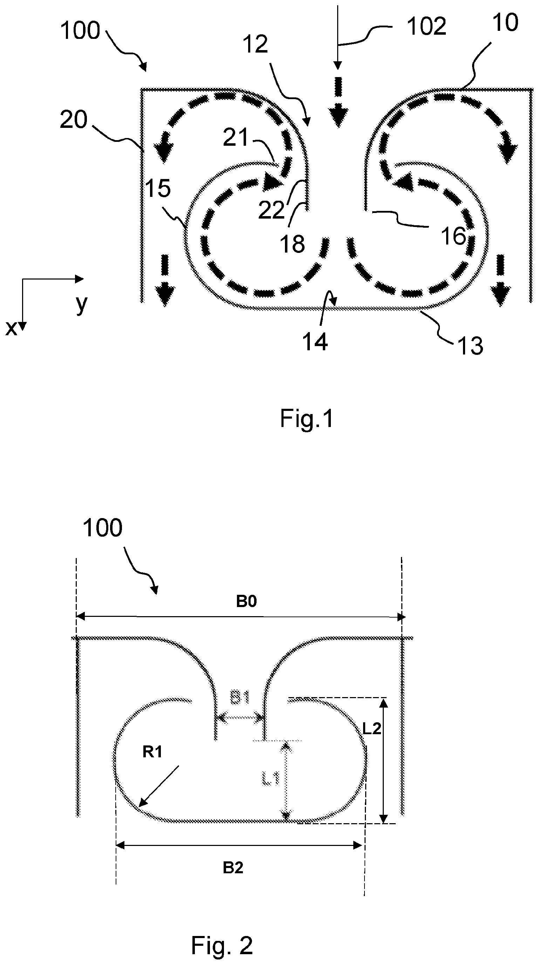

Figur 1 zeigt einen Querschnitt durch eine Abscheidestufe 100 nach einem Ausführungsbeispiel der Erfindung und Figur 2 zeigt den Querschnitt der Abscheidestufe 100 aus Figur 1 mit Erläuterung verschiedener Kenngrößen der nur in Figur 1 mit Bezugszeichen bezifferten Elementen der Abscheidestufe 100.

Die Abscheidestufe 100 weist eingangsseitig eine Anströmfläche 10 und eine Beschleunigungsstrecke 12 auf, beispielsweise eine Düse, gefolgt von einer ersten Abschlagfläche 13 mit Fluidstromumlenkung an einem ersten gekrümmten Abschnitt 15. Die Anströmfläche 10 bildet eine Querschnittsfläche vor der Beschleunigungsstrecke 12.

Zur Orientierung ist ein Koordinatenkreuz x, y angegeben. Die x-Achse entspricht einer Längsachse, die vorzugsweise eine Hauptdurchströmungsrichtung der Beschleunigungsstrecke 12 ist. Die y-Achse entspricht in diesem Beispiel einer Querachse, entlang der die Anströmfläche 10 und ein freier Strömungsquerschnitt am Eintritt des Fluids in die Beschleunigungsstrecke 12 angeordnet sind. Die z-Achse ist senkrecht zur Bildebene gerichtet und entspricht in diesem Beispiel einer Hochachse der Abscheidestufe 100. In diesem Ausführungsbeispiel ist die Abscheidestufe 100 durch ein einzelnes Abscheidesegment gebildet.

Der Fachmann versteht, dass die y-Achse die Hochachse und die z-Achse die Querachse bilden würde, wenn die Abscheidestufe 100 beispielsweise um 90° um die x-Achse gedreht würde.

Als Querschnittsfläche ist die Querschnittsfläche des Abscheidesegments senkrecht zu einer Hauptdurchströmungsrichtung zu verstehen.

Die Hauptdurchströmungsrichtung ist als gedachte gerade Verbindung zwischen Eingangsseite und Ausgangsseite der Abscheidestufe zu verstehen. Die Strömung tritt an der Eingangsseite in die Abscheidestufe ein und an der Ausgangsseite, welche in diesem Beispiel der Eingangsseite gegenüberliegt, wieder aus, unabhängig davon, ob im Innern der Abscheidestufe 100 eine oder mehrere Richtungsumkehrungen erfolgen.

Die Anströmfläche 10 geht in die Wandung der Beschleunigungsstrecke 12 über. Die Beschleunigungsstrecke 12 ist mit ihrem offenen Ende 16 auf einen im Abstand quer dazu angeordneten Prallbereich 14 der ersten Abschlagfläche 13 gerichtet. Dem gekrümmten Abschnitt 15 der ersten Abschlagfläche 13 folgt eine zweite Abschlagfläche 18 mit entgegengesetzter Fluidstromumlenkung an einem weiteren, zum ersten entgegengesetzt gekrümmten Abschnitt 22. Die Fluidströmung ist mit geraden und gerundeten dicken Pfeilen angedeutet.

Das Fluid, beispielsweise ein Gemisch aus Luft und Lackpartikeln und Lack-Agglomeraten aus einer Lackieranlage, trifft auf die Anströmfläche 10, die eine Breite B0 aufweist, und tritt in einer Durchströmungsrichtung 102 in Richtung der x-Achse in die Beschleunigungsstrecke 12 der Abscheidestufe 100 ein. Hierbei wird vereinfacht vernachlässigt, dass durch den gerundeten Verlauf der Beschleunigungsstrecke 12 am Eintritt des Fluids in die Beschleunigungsstrecke 12 der Teil des Fluids, der auf die Anströmfläche 10 trifft, eine Ablenkung in die Beschleunigungsstrecke 12 hinein erfährt. An der engsten Stelle der Beschleunigungsstrecke 12 weist diese eine Breite B1 in Richtung der y-Achse auf.

Der Abstand vom Ende 16 der Beschleunigungsstrecke 12 bis zum gegenüberliegenden Prallbereich 14 der Abschlagfläche 13 ist mit L1 bezeichnet. In diesem Beispiel weist die Beschleunigungsstrecke 12 auch am Ende 16 die Breite B1 auf. Würde sich die Breite der Beschleunigungsstrecke 12 zum Ende 16 hin wieder erweitern, würde der Abstand L1 von der engsten Stelle mit der Breite B1 aus bestimmt, und zwar vom Ende des Bereichs mit der engsten Breite B1, welche dem Ende 16 der Beschleunigungsstrecke 12 am nächsten ist.

Die eintretende Fluidströmung wird symmetrisch zur Längsrichtung der Beschleunigungsstrecke 12 in Querrichtung zu beiden Seiten in zwei entgegengesetzt voneinander weg strömende Teilströme aufgeteilt und vom Ende 16 der Beschleunigungsstrecke 12 nach außen weggelenkt. Auf den in diesem Beispiel ebenen Prallbereich 14 folgt zu beiden Seiten der gleichmäßig mit einem Radius R1 gekrümmte Abschnitt 15 der ersten Abschlagfläche 13. Der gegenüber der Beschleunigungsstrecke 12 liegende Bereich der ersten Abschlagsfläche 13 ist eben ausgebildet.

Die Endkante 21 des gekrümmten Abschnitts 15 ist auf eine zweite Abschlagfläche 18 gerichtet, die einen gekrümmten Abschnitt 22 aufweist. Die zweite Abschlagfläche 18 ist vorteilhaft durch die Außenseite der Beschleunigungsstrecke 12 gebildet. Als Tiefe L2 der ersten Abschlagfläche 13 ist der Abstand zwischen Endkante 21 und Prallbereich 14 bezeichnet.

Das eintretende Fluid wird in der Beschleunigungsstrecke 12 beschleunigt und nach dem Prallbereich 14 auf der linken Seite der Figur entsprechend der Krümmung des gekrümmten Abschnitts 15 im Uhrzeigersinn und auf der gegenüberliegenden rechten Seite im Gegenuhrzeigersinn umgelenkt. Die Umlenkung beträgt mehr als 270°, gegenüber der Durchströmungsrichtung 102. Die Umlenkung um mehr als 270° erhöht die Wahrscheinlichkeit eines Wandkontakts für die Partikel in der Fluidströmung, so dass die Abscheideeffizienz erhöht wird.

An der zweiten Abschlagfläche 18, die mit einem Eintrittsbereich quer zum ersten gekrümmten Abschnitt 15 angeordnet ist, wird der Fluidstrom weiter umgelenkt. Der gekrümmte Abschnitt 22 der zweiten Abschlagfläche 18 ist entgegen dem ersten gekrümmten Abschnitt 15 der ersten Abschlagfläche 13 gekrümmt. Der Fluidstrom wird dort weiter auf der linken Seite in der Figur in Gegenuhrzeigersinn und auf der rechten Seite der Figur im Uhrzeigersinn umgelenkt, so dass der Fluidstrom am Beginn der Abschlagfläche 18 entgegen der ursprünglichen Durchströmungsrichtung 102 in der Begrenzungsstrecke 12 strömt und schließlich an einer Begrenzungswand 20 weiter in Richtung der x-Achse umgelenkt wird. Die beiden Teilströme verlassen die Abscheidestufe 100 in der ursprünglichen Durchströmungsrichtung 102.

Partikel aus dem Fluid können sich durch die Umlenkung an den gekrümmten Abschnitten 15, 22 herrschenden Fliehkräften leicht an den gekrümmten Abschnitten 15, 22 ablagern. Partikel, die sich nach der ersten Umlenkung an der ersten Abschlagfläche 13 entfernt von dieser in der Fluidströmung befinden, kommen bei der zweiten Umlenkung an der zweiten Abschlagfläche 18 zwangsläufig in die Nähe der zweiten Abschlagfläche 18 und können sich dort leicht anlagern und somit aus dem Fluidstrom entfernt werden.

Der Abstand L1 zwischen Beschleunigungsstrecke 12 und dahinter angeordneter Abschlagfläche 13 beträgt mindestens die Hälfte der Breite B2 im engsten Querschnitt der Beschleunigungsstrecke 12. Ein geringerer Abstand L1 führt zu einem erhöhten Druckverlust und die Struktur würde schnell durch abgeschiedenen Lack zugesetzt. Das Verhältnis der Breite B2 zur Tiefe L2 der ersten Abschlagfläche 13 liegt zwischen 1:2 und 3:1. Als besonders vorteilhaft für die Strömungsführung hat sich ein Verhältnis von mehr als 1,5:1, insbesondere ca. 2:1, herausgestellt.

Die mittlere Einströmgeschwindigkeit im engsten Querschnitt der Beschleunigungsstrecke 12 beträgt vorzugsweise 5 m/s bis 20 m/s. Sollen möglichst hohe Abscheidegrade erzielt werden, haben sich Geschwindigkeiten von ca. 15 m/s als vorteilhaft erwiesen. Soll hingegen eine Grobabscheidung bei möglichst geringem Druckverlust stattfinden, haben sich Geschwindigkeiten von ca. 10 m/s als vorteilhaft erwiesen.

Vorteilhaft ist, wenn eine lichte Breite B1 der Beschleunigungsstrecke 12 der Abscheidestufe 100 an der engsten Stelle mindestens 20 mm beträgt, um ein Zusetzen der Beschleunigungsstrecke 12 durch anhaftende Partikel, z.B. Lackanhaftungen aus Lackieranlagen, zu verhindern. Für Lacke, die bei der Abscheidung besonders voluminöse Agglomerate bilden, was typisch z.B. für wasserbasierte Basislacke ist, ist die lichte Breite B1 vorzugsweise mindestens 40 mm.

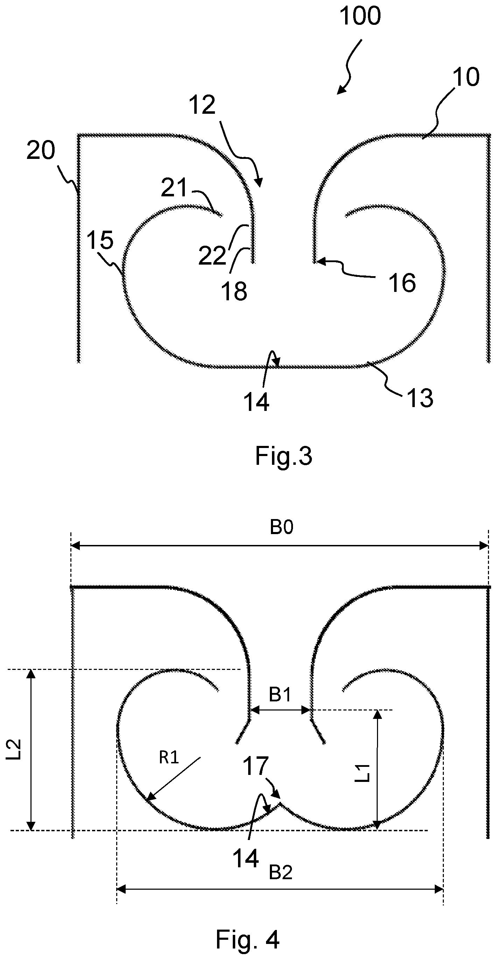

Figur 3 zeigt einen Querschnitt durch eine durch ein einziges Abscheidesegment gebildete Abscheidestufe 100 nach einem weiteren Ausführungsbeispiel der Erfindung mit einer einströmseitigen Beschleunigungsstrecke 12 gefolgt von einer ersten Abschlagfläche 13 mit einem ersten gekrümmten Abschnitt 15 zur Fluidstromumlenkung der Abschlagfläche 13 und einer zweiten Abschlagfläche 18 mit entgegengesetzter Fluidstromumlenkung an einem zweiten gekrümmten Abschnitt 22. Als Weiterentwicklung der Abscheidestufe 100 aus Figur 1 kann zur Erhöhung der Abscheideeffizienz die Krümmung entlang des gekrümmten Abschnitts 22 zunehmen, d.h. der Krümmungsradius der ersten Abschlagfläche 13 in Umlenkrichtung kleiner werden, um die Fluidströmung in Richtung auf die zweite Abschlagfläche 18 hin zu beschleunigen. Dabei kann die Umlenkung auch mehr als 270° betragen. Bei der zweiten Abschlagfläche 18 handelt es sich zugleich um die Außenwandung zur Führung der Rückumlenkung, vorzugsweise um die Rückseite der Wandung der einströmseitigen Beschleunigungsstrecke 12. Die Abscheidung von Partikeln aus der Fluidströmung bei der Rückumlenkung wird dadurch verstärkt. Dies ist vorteilhaft, wenn mit der Abscheidestufe 100 eine möglichst hohe Abscheideeffizienz erzielt werden soll.

Figur 4 zeigt einen Querschnitt einer weiteren Abscheidestufe 100 mit Erläuterung verschiedener Kenngrößen, bei welcher der Prallbereich zum Ende der Beschleunigungsstrecke konkav gewölbt ist. Ersichtlich ist der Abstand L1 zwischen dem Ende mit dem kleinsten Querschnitt der Beschleunigungsstrecke 12 und dem gewölbten Prallbereich der ersten Abschlagfläche. Der gegenüber der Beschleunigungsstrecke 12 liegende Bereich des Prallbereichs 14 ist spitz ausgebildet, so dass eine Spitze 17 des Prallbereichs 14 gegen die Strömung gerichtet ist.

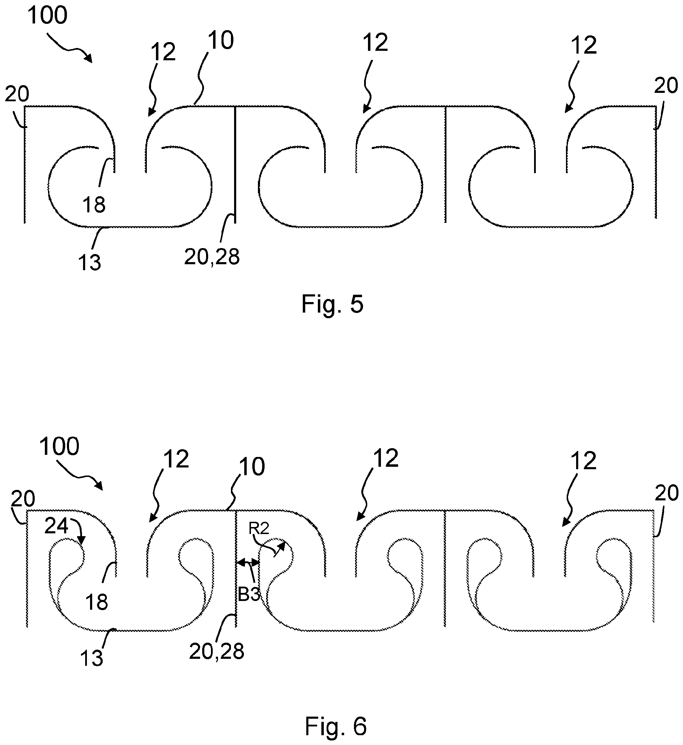

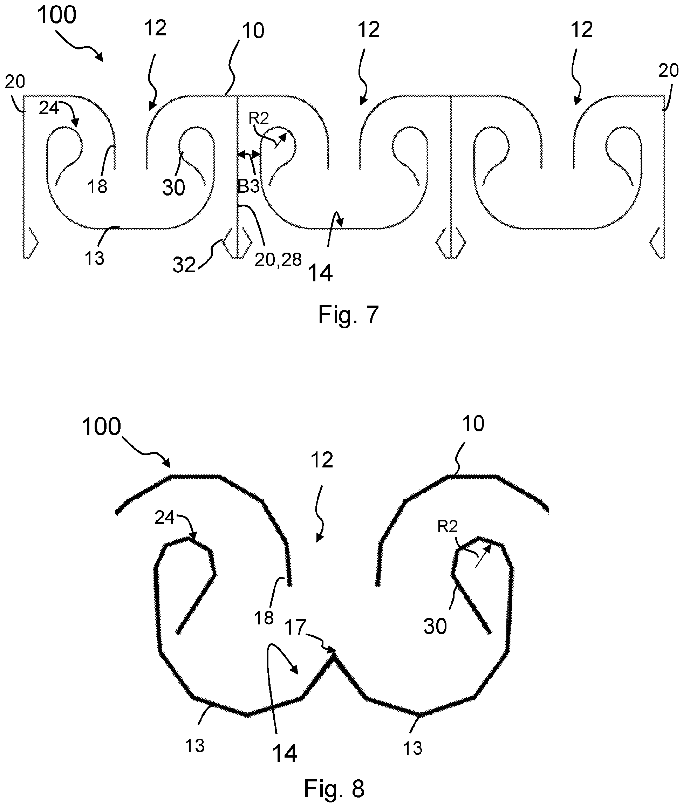

Die Figuren 5 bis 7 zeigen Querschnitte von Abscheidestufen 100 nach verschiedenen Ausführungsbeispielen der Erfindung, bei denen in der Anströmfläche 10 mehrere jeweils identische Abscheidesegmente mit Beschleunigungsstrecken 12 und erste Abschlagflächen 13 nebeneinander angeordnet und parallel anströmbar sind. Vorzugsweise sind die Beschleunigungsstrecken 12 äquidistant zueinander angeordnet. Die einzelnen Beschleunigungsstrecken 12 und Abschlagflächen 13, 18 können im Wesentlichen wie die in den Figuren 1 und 3 ausgebildet sein, wie in Figur 5 zu sehen ist. Zusätzlich oder alternativ können diese wie in den Figuren 6 und 7 weitergebildet sein. Zur detaillierten Beschreibung der Abscheidestufe 100 wird auf die Figuren 1 bis 3 verwiesen.

Dabei zeigt Figur 5 einen Querschnitt durch eine Abscheidestufe 100 nach einem Ausführungsbeispiel der Erfindung mit drei parallel durchströmbaren Beschleunigungsstrecken 12 in der Anströmfläche 10 nach Figur 1. Die einzelnen Beschleunigungsstrecken 12 und Abschlagflächen 13 sind durch Trennwände 28 voneinander getrennt, welche jeweils einer Begrenzungswand 20 der Abscheidestufe 100 in den Figuren 1 und 3 entsprechen. Die Abscheidestufe 100 weist beidseits seitliche Begrenzungswände 22 parallel zu den Trennwänden 28 auf.

Figur 6 zeigt einen Querschnitt durch eine Abscheidestufe 100 nach einem weiteren Ausführungsbeispiel der Erfindung mit parallel durchströmbaren Beschleunigungsstrecken 12 in der Anströmfläche 10 und daran anschließenden Abschlagflächen 13 mit jeweils gerundeter Endkante 24 des gekrümmten Abschnitts 15 der ersten Abschlagfläche 13. Die gerundete Endkante 24 ist im Querschnitt beispielsweise tropfenförmig und weist wenigstens einen Kreisbogenabschnitt mit einem Innenradius R2 auf. Eine solche gerundete Endkante 24 des gekrümmten Abschnitts 15 der ersten Abschlagfläche 13 ist bei Umlenkungen um mehr als 90° günstig. Vorteilhaft beträgt der Innenradius R2 mindestens ein Viertel einer Breite B3 eines freien Strömungsquerschnitts im Strömungskanal zwischen gerundeter Endkante 24 am ausgangsseitigen Ende des gekrümmten Abschnitts 15 der ersten Abschlagfläche 13 und der Außenseite der Beschleunigungsstrecke 12, um den Druckverlust zu reduzieren, insbesondere zu minimieren. Eine besonders signifikante Reduktion des Druckverlusts kann erreicht werden, wenn der Innenradius R2 der gerundeten Endkante 24 wenigstens die Hälfte der Breite B3 des freien Strömungsquerschnitts im Strömungskanal zwischen gerundeter Endkante 24 und der Außenseite der Beschleunigungsstrecke 12 beträgt. B3 bezeichnet den kleinsten Strömungsquerschnitt zwischen dem Innenradius R2 und der zweiten Abschlagfläche 18 beziehungsweise Begrenzungswand/Trennwand 20, 28, je nach konkreter Position des kleinsten Strömungsquerschnitts B3.

Figur 7 zeigt einen Querschnitt durch eine Abscheidestufe 100 nach einem weiteren Ausführungsbeispiel der Erfindung mit drei parallel durchströmbaren Beschleunigungsstrecken 12 in der Anströmfläche 10, mit zur Fluidströmung hin geöffneten Fangnischen 30 an der Endkante 24 der ersten Abschlagfläche 13 und einer Fangnische 32 am Ausgang der Trennwände 28 zwischen den Beschleunigungsstrecken 12 und Abschlagflächen 13 und der Begrenzungswände 20 an der Außenseite der Abscheidestufe 100. Der Innenradius der Fangnische 30 kann wie in Figur 6 ausgebildet sein.

An überströmten Innenradien R2 mit gerundeter Endkante 24 oder vor der relativ scharfkantigen Endkante 21 überströmter Wandungen verhindern die entgegen der Überströmungsrichtung geöffneten Fangnischen 30, 32 ein Mitreißen bereits auf der Wandfläche abgeschiedener Partikel, insbesondere Lackpartikel oder Agglomerate.

Die Abscheidestufen 100 und daraus gebildete Abscheideeinheiten können für verschiedene Anwendungsfälle, insbesondere definiert durch einen erforderlichen Abscheidegrad, zu behandelnden Volumenstrom und Prozessbedingungen, angepasst werden, indem einzelne Abscheidestufen 100 aus einem Sortiment geeigneter Abscheidestufen ausgewählt und in geeigneter Reihenfolge hintereinander angeordnet werden.

Dabei kann eine geforderte Abscheideeffizienz bei möglichst geringem Druckverlust über die Abscheideeinheit 100 erreicht werden. Ebenso ist eine möglichst hohe Speicherfähigkeit darstellbar, um eine hohe Standzeit der Abscheideeinheiten zu erreichen. Die Abscheideeinheit 100 kann gut handhabbare Abmessungen und insbesondere auch im beladenen Zustand ein noch gut handhabbares Gewicht aufweisen.

Figur 8 zeigt ein Detail einer Abscheidestufe 100, dargestellt ohne Außenwände nach einem Ausführungsbeispiel der Erfindung. Die Krümmung der gekrümmten Bereiche wird mittels nicht näher bezeichnete Falzlinien erreicht, so dass sich jeweils zwischen den Falzlinien gerade Flächensegmente erstrecken. Je nach Krümmung schließen benachbarte Flächensegmente einen mehr oder weniger kleinen Winkel miteinander ein. Der gegenüber der Beschleunigungsstrecke 12 liegende Bereich des Prallbereichs 14 ist spitz ausgebildet, so dass eine Spitze 17 des Prallbereichs 14 gegen die Strömung gerichtet ist.

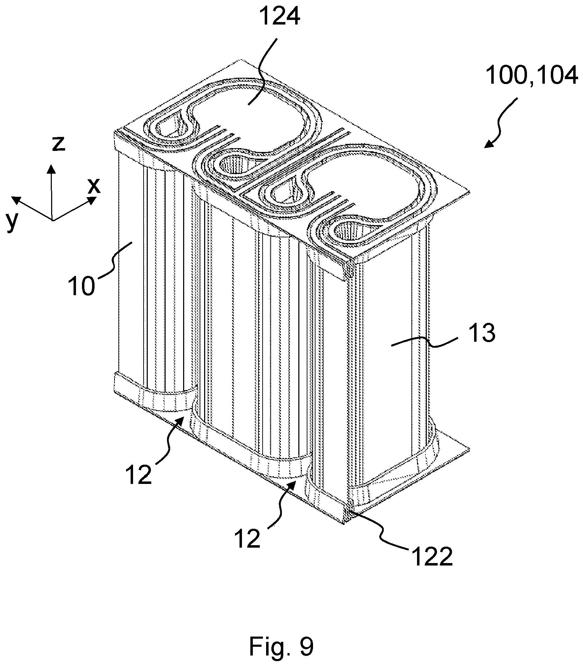

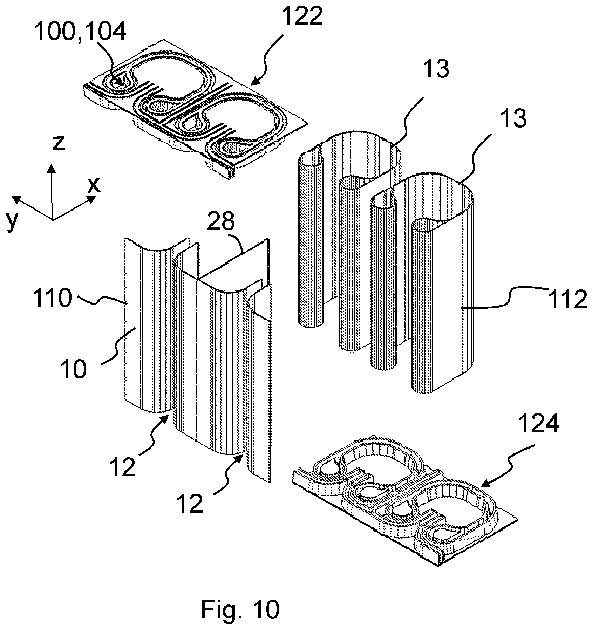

Figur 9 zeigt in isometrischer Darstellung eine Abscheidestufe 100 nach einem Ausführungsbeispiel der Erfindung, und Figur 10 zeigt in Explosionsdarstellung die Abscheidestufe 100 aus Figur 9.

Für ein jeweiliges Abscheidesegment der ersten Abscheidestufe 100 einer Abscheideeinheit liegt das Verhältnis der freien Einströmfläche, d.h. des engsten Querschnitts in der Beschleunigungsstrecke 12, zur gesamten Querschnittsfläche vor der Beschleunigungsstrecke 12 im Bereich von 1:4 bis 1:10. Als vorteilhaft hat sich ein Verhältnis im Bereich von 1:6 bis 1:8 herausgestellt. Als Querschnittsfläche ist die Querschnittsfläche des jeweiligen Abscheidesegments der Abscheidestufe 100 senkrecht zu einer Hauptdurchströmungsrichtung zu verstehen. Die gesamte Querschnittsfläche der Abscheidesegmente wird auch als Anströmfläche 10 bezeichnet.

Die Abscheidestufe 100 ist aus einem Bodenteil 122, einem, vorzugsweise baugleichen, Deckelteil 124, sowie mehreren Bauteilen 110, 112 aufgebaut, welche Wandungsteile für die Strömungsumlenkung bilden sollen, nämlich Anströmfläche 10 mit schlitzartig ausgebildeten Beschleunigungsstrecken 12 sowie erste Abschlagflächen 13. Das Bauteil 110 stellt im zusammengebauten Zustand auch die zweiten Abschlagflächen 18 bereit.

Bodenteil 122 und Deckelteil 124 weisen eine, z.B. durch Vertiefungen, Haltenoppen, o.ä. vorgegebene, Negativkontur in Form des zu durchströmenden horizontalen Querschnitts der Abscheidestufe 100 auf. In diese Negativkonturen werden die Bauteile 110, 112 eingesteckt.

Bodenteil 122 und Deckelteil 124 können als flacher Zuschnitt, beispielsweise aus Wellpappe, mit entsprechenden Ausschnitten vorliegen oder, bevorzugt, als dreidimensional geformtes Bauteil. Besonders bevorzugt liegen Bodenteil 122 und Deckelteil 124 als Faserformteil oder Tiefziehteil vor, bei dem die Negativkontur in Form sich nach unten verjüngender Vertiefungen und/oder Erhebungen mit trapezförmigem Querschnitt ausgebildet ist, so dass Einführschrägen für ein einfacheres Einstecken der Bauteile 110, 112 zur Verfügung stehen.

Die Bauteile 110, 112 der Wandungsteile bestehen vorzugsweise aus Flächenzuschnitten, beispielsweise Wellpappe, oder dreidimensional geformten Bauteilen 110, 112. Handelt es sich um Flächenzuschnitte, werden diese beim Zusammenbau der Abscheidestufe 100 durch Falten oder Biegen in die vorgesehene dreidimensionale Form gebracht. Dazu ist es vorteilhaft, wenn die Flächenzuschnitte entsprechende Perforationen und/oder Falzlinien aufweisen, um eine einwandfreie Ausbildung der vorgesehenen Struktur zu erleichtern.

Diese Bauweise ist für eher grobe Abscheidestrukturen geeignet, die bei geringem Druckverlust eine mittlere Abscheideeffizienz und ein sehr hohes Speichervolumen bieten. Daher ist diese Abscheidestufe 100 vor allem als erste Abscheidestufe 102 zur Grobabscheidung vorgesehen. Sie kann prozessabhängig, insbesondere lackabhängig, aber auch als einzige Abscheidestufe 100 ausreichend sein. In CFD-Simulationen und Tests solcher Abscheidestufen 100 konnte bei Differenzdrücken der unbeladenen Abscheidestufe 100 zwischen 100 Pa und 300 Pa eine Abscheideeffizienz im Bereich von 60% bis 96% erreicht werden.

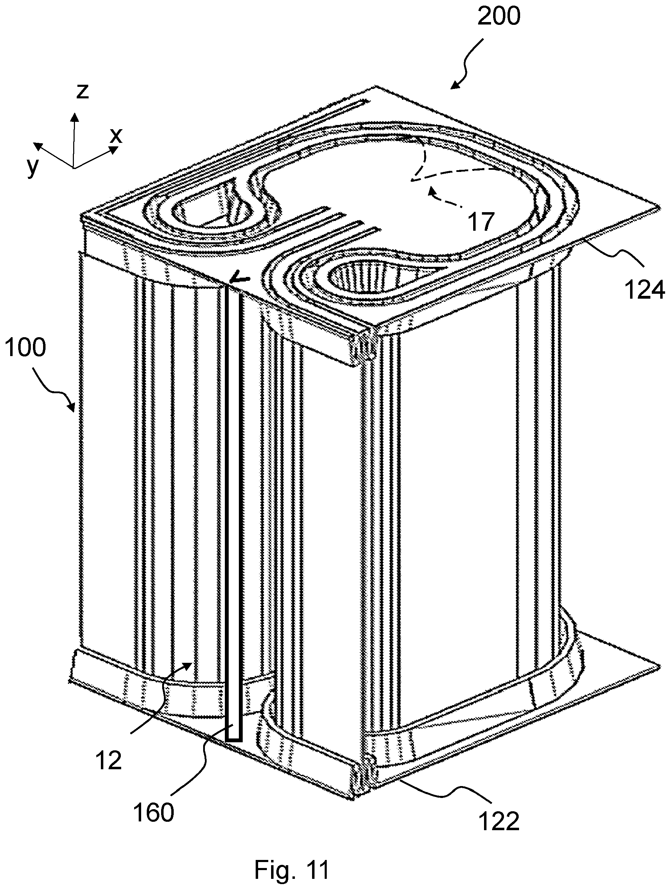

Figur 11 zeigt eine isometrische Ansicht einer Abscheidestufe 100 einer Abscheideeinheit 200 nach einem Ausführungsbeispiel der Erfindung mit einem Leitelement 160 vor dem freien Strömungsquerschnitt der Beschleunigungsstrecke 12. In diesem Ausführungsbeispiel umfasst die Abscheidestufe 100 beispielhaft nur ein einziges Abscheidesegment.

Das Leitelement 160 erstreckt sich in einer Symmetrieebene des freien Strömungsquerschnitts am Eintritt des Fluids in die Beschleunigungsstrecke 12 vom Bodenteil 122 bis zum Deckelteil 124 entlang der z-Achse. Das Leitelement 160 weist in diesem Beispiel eine Ausdehnung auf, welche parallel zur z-Achse ist.

Das Leitelement 160 ist in diesem Beispiel gegen die Strömungsrichtung spitz zulaufend ausgebildet mit einem beispielsweise V-förmigen Querschnitt. Das Leitelement 160 kann zur Geräuschminimierung bei der Durchströmung der Abscheideeinheit 200 dienen.

Das Leitelement 160 kann lösbar von der Abscheideeinheit 200 vorgesehen sein und bei Bedarf aus der Abscheideeinheit 200 entfernt werden.

Das Leitelement 160 kann die Durchströmung so beeinflussen, dass eine Geräuschentwicklung reduziert oder weitgehend unterdrückt werden kann.

Durch geeignete Positionierung und/oder Formgebung des Leitelements 160 kann dieses eine Verwirbelung des einströmenden Fluids, beispielsweise einströmender Luft, und/oder eine Reflexion des hinter der Beschleunigungsstrecke 12 entstehenden Schalls hervorrufen.

In einem alternativen Beispiel kann der Querschnitt des gegenüber der Beschleunigungsstrecke 12 liegenden Bereichs des Prallbereichs 14 (s. z.B. Figuren 4 und 8) spitz ausgebildet sein, so dass eine Spitze 17 des Prallbereichs 14 gegen die Strömung gerichtet ist. Dies ist in der Figur mit einer unterbrochenen Linie am Deckelteil 124 angedeutet.

Das Leitelement 160 kann als einteiliges Zusatzelement vorgesehen sein, das beim Aufbau der Abscheideeinheit 106 hinzugefügt oder bedarfsweise weggelassen werden kann.

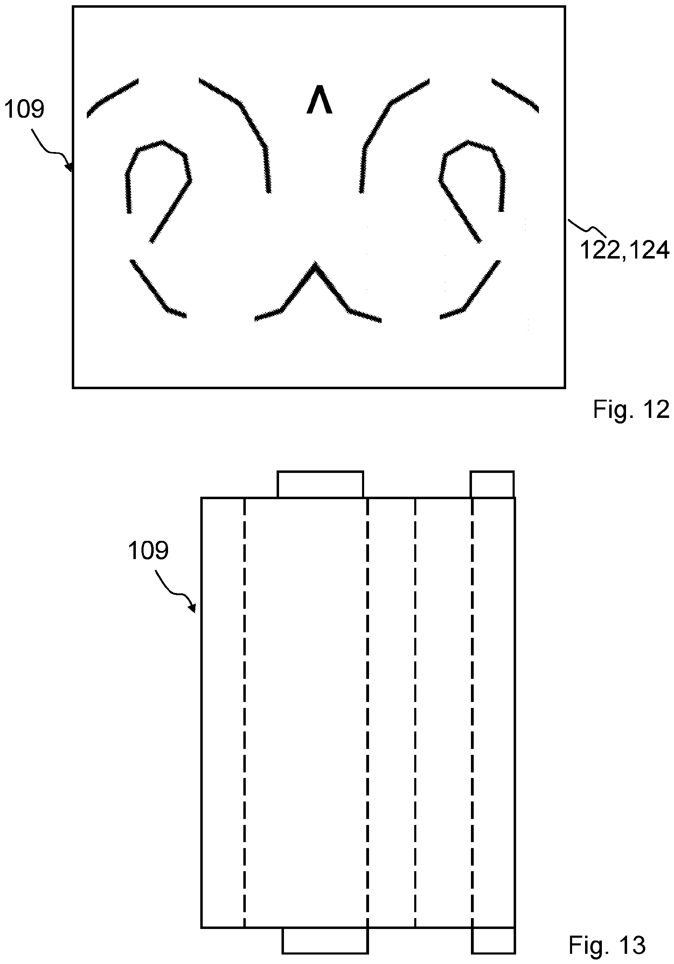

Figur 12 zeigt ein Bodenteil 122 oder Deckelteil 124 eines Bausatzes 109 zur Herstellung einer Abscheidestufe nach einem Ausführungsbeispiel der Erfindung. Figur 13 zeigt ein Wandteil des Bausatzes 109 zur Herstellung der Abscheidestufe. Die Negativkontur der Abscheidestufe ist als Abfolge von durchbrochenen Öffnungen in dem Bodenteil 122 oder Deckelteil 124, welche die Form der Wandelemente der Abscheidestufe nachbildet, ausgebildet.

Das abgebildete Wandteil kann durch Wölben oder Knicken in seine Form gebracht und mit seinen Laschen an seinen Schmalseiten in die Öffnungen der Negativkontur eingesteckt werden.

Ein günstiges Verfahren zur Herstellung einer Abscheidestufe 100 oder Abscheideeinheit 200 mit wenigstens einer erfindungsgemäßem Abscheidestufe 100 sieht vor, dass der Bausatz 109 aus Bauteilen bereitgestellt wird.

Die Bauteile sind insbesondere Zuschnitte aus Karton und/oder Wellpappe und/oder Faserformteilen und/oder Tiefziehteilen aus Kunststoff.

Bauteile aus dem Bausatz werden entnommen und zur Bildung wenigstens einer Anströmfläche, wenigstens einer Beschleunigungsstrecke und wenigstens einer Abschlagfläche geformt.

Die geformten Bauteile werden in eine entsprechende Negativform von Bodenteil 122 und/oder Deckelteil 124 gesteckt. Der Zusammenbau aus der wenigstens einen Anströmfläche, der wenigstens einen Beschleunigungsstrecke und der wenigstens einen Abschlagfläche mit Bodenteil 122 und Deckelteil 124 wird in ein Gehäuse eingesetzt.

Optional kann wenigstens eine Filterstufe, insbesondere ein Tiefenfilter, in Durchströmungsrichtung stromab der wenigstens einen Abscheidestufe in das Gehäuse eingesetzt werden.

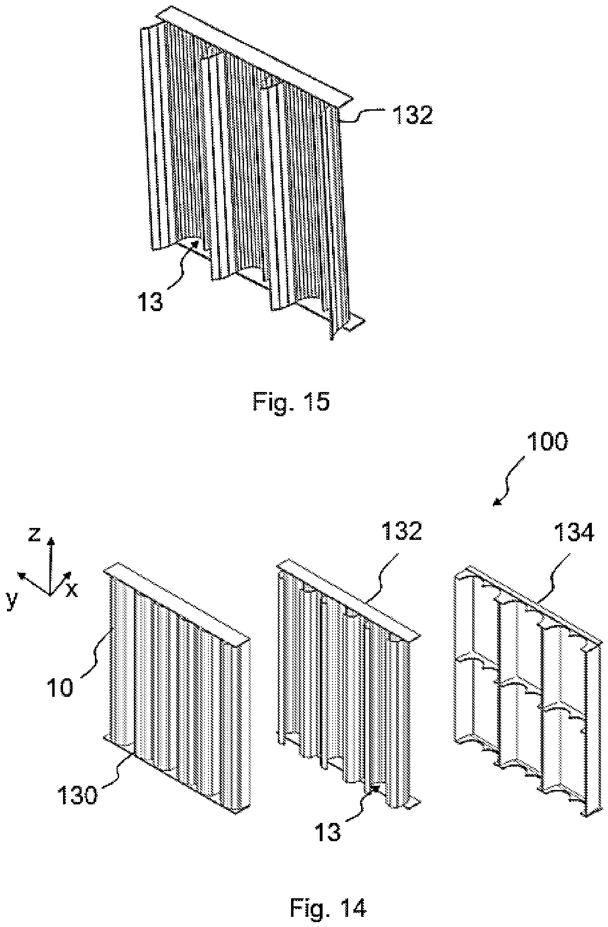

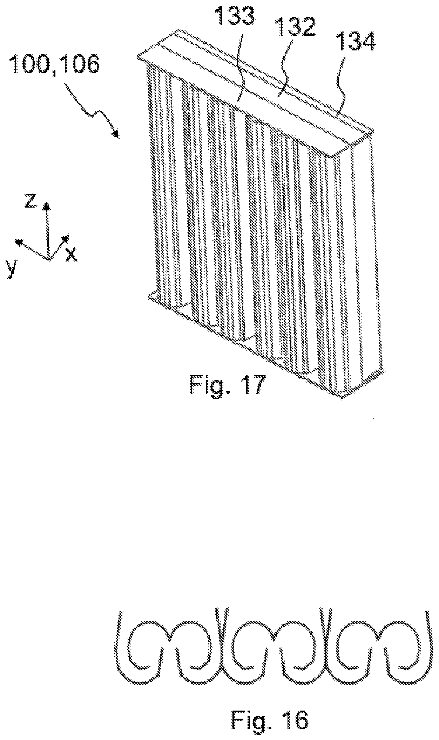

Die Figuren 14 bis 17 zeigen ein weiteres Ausführungsbeispiel der Erfindung. Figur 14 zeigt dabei in Explosionsdarstellung einzelne Bauteile 130, 132, 134 eines Bausatzes 109 für eine Abscheidestufe 100, wobei ein Bauteil 132 für erste Abschlagflächen 13 sowohl in gefalteter Form als auch zusätzlich, in Figur 15, in ungefalteter Form dargestellt ist. Figur 16 zeigt einen Querschnitt der Abscheidestufe 100 nach Figur 14 und Figur 17 die Abscheidestufe 100 nach Figur 14 in zusammengebauter Form. Im Gegensatz zum vorherigen Ausführungsbeispiel weisen die Bauteile 130, 132, 134 stirnseitig oben und unten ebene Abschlussleisten auf, welche die einzelnen Elemente des jeweiligen Bauteils 130, 132, 134 zusammenhalten.

Die Abscheidestufe 100 ist aus einem oder mehreren, dreidimensional geformten, als Flächenkörper ausgebildeten Bauteilen 130, 132, 134 aufgebaut und bildet eine relativ feine Abscheidestufe 106. Die Flächenkörper sind dreidimensional, jedoch hinterschneidungsfrei geformt.

Die Abscheidestruktur kann erzeugt werden durch Anordnung mehrerer Bauteile 130, 132, 134 hintereinander oder durch Faltung eines oder mehrerer solcher Bauteile 130, 132, 134 oder durch eine Kombination aus Faltung und Anordnung dieser Bauteile 130, 132, 134 hintereinander.

Bei den als Flächenkörper ausgebildeten Bauteilen 130, 132, 134 handelt es sich vorzugsweise um Faserform- oder Tiefziehteile. Das Bauteil 130 enthält die Anströmfläche 10 und Beschleunigerstrecken 12 sowie Trennwände zwischen den Beschleunigungsstrecken 12, das Bauteil 132 die ersten Abschlagflächen 13 und das Bauteil 134 eine Stützstruktur für das Bauteil 132.

Diese Bauweise der Abscheidestufe 106 ist für eher feine Abscheidestrukturen mit erhöhter Abscheideeffizienz und geringerem Speichervolumen geeignet.

Die geometrische Struktur der Abscheidestufe 100 umfasst dazu mehrere parallel angeordnete, als Einströmdüsen ausgebildete Beschleunigungsstrecken 12 mit vergleichsweise dicht dahinter angeordneten ersten Abschlagflächen 13, die vergleichsweise kleine Krümmungsradien aufweisen. In CFD-Simulationen solcher Abscheidestufen 100 lag die Abscheideeffizienz bei Differenzdrücken über die unbeladene Abscheidestufe zwischen 300 Pa bis 400 Pa im Bereich von 93 bis 99%.

Ein Set aus Bauteilen 130, 132, 134 kann so gestaltet sein, dass daraus alternativ mehrere verschiedene Abscheidestufen 100 herstellbar sind. Bei den Bauteilen 130, 132, 134 handelt es sich vorzugsweise um Zuschnitte aus Karton oder Wellpappe und/oder Faserformteile und/oder Tiefziehteile aus Kunststoff. Faserform- oder Tiefziehteile sind herstellungsbedingt hinterschneidungsfrei geformt und daher gut stapelbar. Sämtliche Bauteile können daher platzsparend transportiert werden

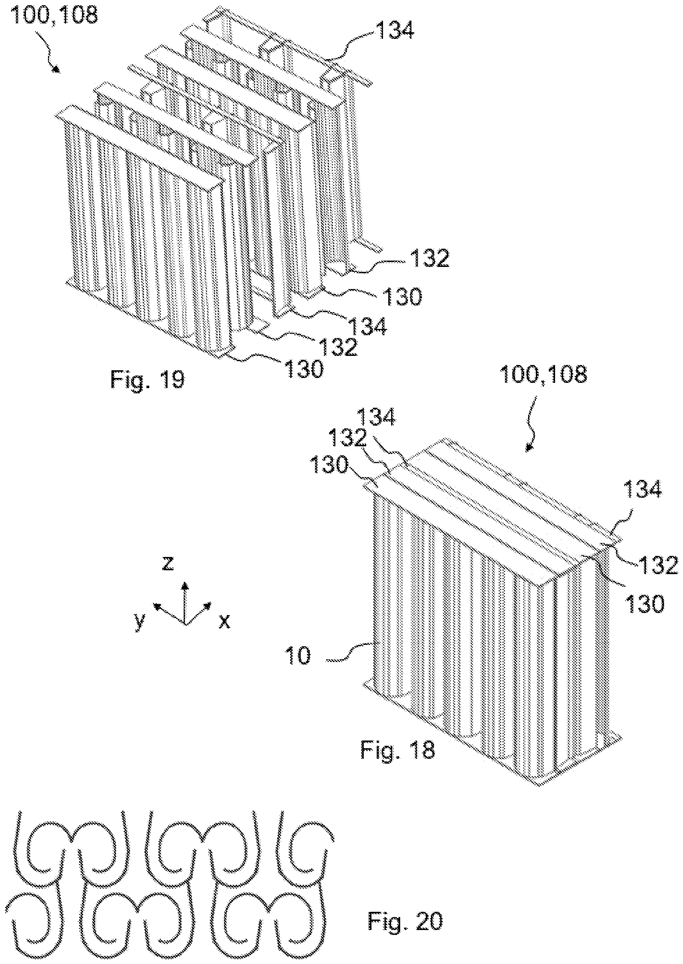

Die Figuren 18 bis 20 zeigen ein weiteres Ausführungsbeispiel der Erfindung. Dabei zeigt Figur 18 eine Abscheidestufe 100 nach einem Ausführungsbeispiel der Erfindung mit zwei strömungsmäßig parallel, jedoch hintereinander angeordneten Abscheidestufen. Figur 19 zeigt in Explosionsdarstellung die Abscheidestufe 100 aus Figur 18. Figur 20 zeigt einen Querschnitt der Abscheidestufe 100 nach Figur 18;

Die Abscheidestufe 100 zeichnet sich dadurch aus, dass durch parallele, als Einströmdüsen ausgebildete Beschleunigungsstrecken 12 angeströmte Abschlagflächen räumlich hintereinander angeordnet sind. Zur Darstellung der hintereinander angeordneten Strukturen werden hier mehrfach identische Bauteile 130, 132, 134 eingesetzt, die für den hinteren Teil der Struktur lediglich um 180° um die x-Achse, hier die Längsachse, gedreht eingesetzt werden müssen. Bei den Bauteilen 130, 132, 134 handelt es sich vorzugsweise um Faserformteile.

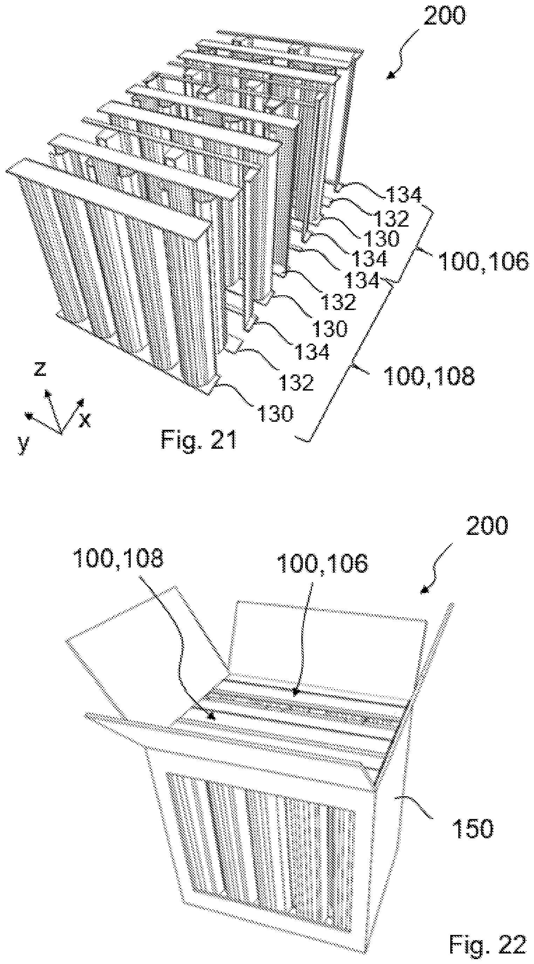

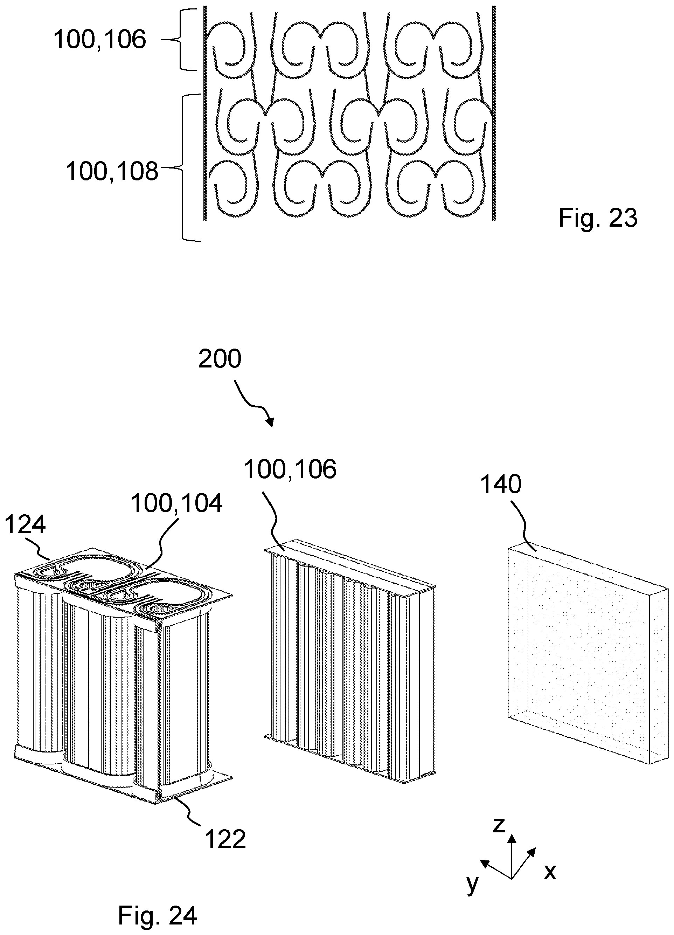

Die Figuren 21 bis 23 zeigen ein Ausführungsbeispiel einer Abscheideeinheit 200 nach der Erfindung. Dabei zeigt Figur 21 in Explosionsdarstellung die Abscheideeinheit 200 mit einer Abscheidestufe 108 wie in den Figuren 18 bis 20 und einer einfachen, dazu in Serie geschalteten feinen Abscheidestufe 106. Figur 22 zeigt die Abscheideeinheit 200 nach Figur 21 in einem Gehäuse 150 eingesetzt und Figur 23 zeigt einen Querschnitt der Abscheidestufen 108, 106 der Abscheideeinheit 200 nach Figur 22.

Bei der ersten Abscheidestufe 100, 108 erfolgt die Einströmung durch sechs parallel durchströmte Beschleunigungsstrecken 12 im ersten Bauteil 130, und die ersten Abschlagflächen 13 (Bauteil 132) dahinter sind versetzt hintereinander angeordnet. Die zweite Abscheidestufe 100, 106 besteht aus geometrisch identischen Konturen, weist jedoch nur drei durchströmte Beschleunigungsstrukturen 12 im Bauteil 130 im hinteren Bereich der Explosionsdarstellung auf. Die erste und zweite Abscheidestufe 108, 106 sind aus insgesamt 10 Bauteilen 130, 132, 134 aufgebaut: Vorteilhaft ist jedoch, dass dazu nur drei verschiedene Bauteile 130, 132, 134 zum Einsatz kommen. Die zweite Abscheidestufe 106 weist eine höhere Abscheideeffizienz auf, da sie mit den doppelten Strömungsgeschwindigkeiten durchströmt wird, wie die erste Abscheidestufe 106. Beide Abscheidestufen 108, 106 sind in einem gemeinsamen Umkarton als Gehäuse 150 angeordnet.

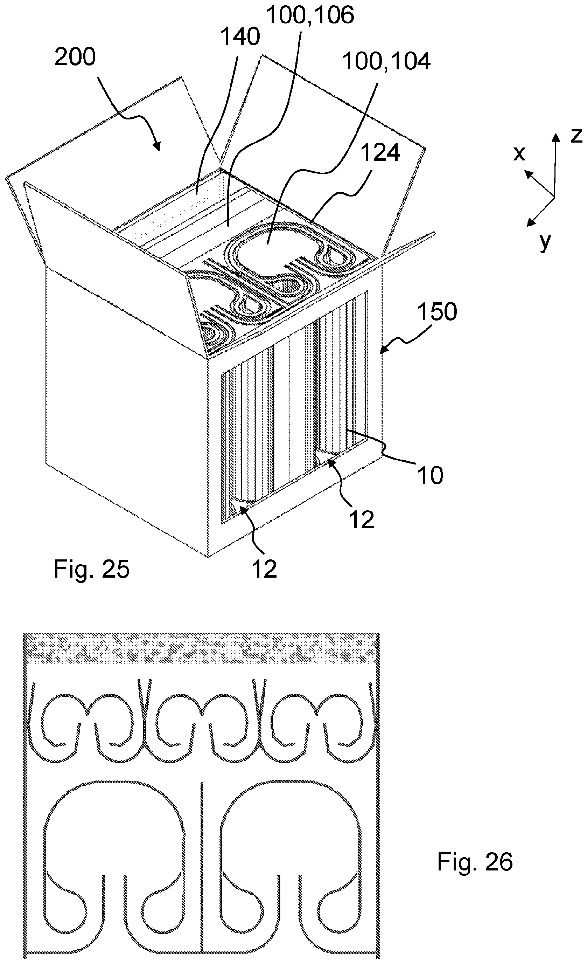

Die Figuren 24 bis 26 zeigen ein weiteres Ausführungsbeispiel einer Abscheideeinheit 200 mit mehreren Abscheidestufen 100. Dabei zeigt Figur 24 in Explosionsdarstellung eine grobe Abscheidestufe 104, eine feine Abscheidestufe 106 und ein Tiefenfilter 140 nach einem Ausführungsbeispiel der Erfindung. Figur 25 zeigt in isometrischer Darstellung die Abscheideeinheit 200 aus Figur 24. Figur 26 zeigt einen Querschnitt der Abscheideeinheit 200 nach Figur 25.

Die Abscheideeinheit 200 ist aus zwei Abscheidestufen 104, 106 und einer Nachfilterstufe in Form eines Tiefenfilters 140 aufgebaut. Die erste Abscheidestufe 104 ist entsprechend dem Ausführungsbeispiel in den Figuren 9 bis 10 aufgebaut und dient als druckverlustarmer Grobabscheider. Die zweite Abscheidestufe 106 ist entsprechend des Ausführungsbeispiels in den Figuren 14 bis 17 und aufgebaut dient als Feinabscheider mit erhöhter Effizienz. Als Nachfilterstufe folgt eine Lage Filtermaterial als Tiefenfilter 140, beispielsweise eine handelsübliche 100 mm dicke Glasfaser-Farbnebelabscheidematte oder dergleichen.

Beide Abscheidestufen 104, 106 und Tiefenfilter 140 sind in einem gemeinsamen Umkarton als Gehäuse 150 angeordnet
Generell sind in den Ausführungsbeispielen Abscheideeinheiten 200 bevorzugt, deren äußere Maße Breite x Höhe x Tiefe (entspricht der in Durchströmungsrichtung 102 (Figur 1) gemessenen Kantenlänge) = 500 x 500 x 700 mm nicht überschreiten.

Die Filterstufe 140 in Form eines Tiefenfilters kann vorteilhaft einen gefalteten Filterbalg 142 aufweisen.

Die Abscheideeinheit 200 ist zur Behandlung eines Luftvolumenstroms von 500 m³/h bis 2000 m³/h, insbesondere 1300 m³/h bis 1800 m³/h vorgesehen.

Bei einer Anströmgeschwindigkeit der Abscheideeinheit 200 (bezogen auf die gesamte Querschnittsfläche) von 1,6 m/s liegt der Druckverlust für die Durchströmung der unbeladenen Abscheideeinheit im Bereich von 200 Pa bis 800 Pa, vorzugsweise maximal 600 Pa.

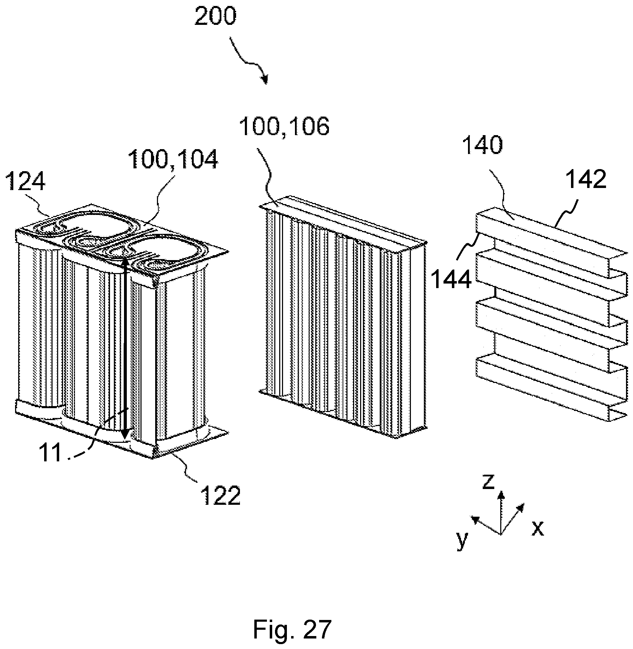

Figur 27 zeigt in Explosionsdarstellung ein weiteres Ausführungsbeispiel der Erfindung mit einer Abscheideeinheit 200 mit zwei Abscheidestufen 100, nämlich einer groben Abscheidestufe 104 mit zwei parallel durchströmbaren, nicht näher bezeichneten Beschleunigungsstrecken und einer feinen Abscheidestufe 106 mit drei parallel durchströmbaren, nicht näher bezeichneten Beschleunigungsstrecken, und einer nachgeschalteten Filterstufe 140 in Form eines Tiefenfilters.

Die Filterstufe 140 weist einen gefalteten Filterbalg 142 auf, dessen Faltenkanten 144 in Richtung der y-Achse und damit quer zur sich in Richtung der z-Achse erstreckenden Ausdehnung 11 der Beschleunigungsstrecken, die sich in Richtung der z-Achse erstrecken, orientiert sind. Dies erlaubt eine gleichmäßige Durchströmung der Filterstufe 140 durch das Fluid, das aus der zweiten Abscheidestufe 106 austritt. Würde die Abscheideeinheit 200 beispielsweise um die x-Achse verkippt, ist es vorteilhaft, die relative Orientierung der Faltenkanten 144 der Filterstufe 140 quer zu der Ausdehnung 11 der Beschleunigungsstrecke 12 zu erhalten.

Die Filterkanten 144 sind in diesem Beispiel eckig ausgebildet. Optional können die Filterkanten 144 auch anders gestaltet sein, beispielsweise V-förmig oder U-förmig.

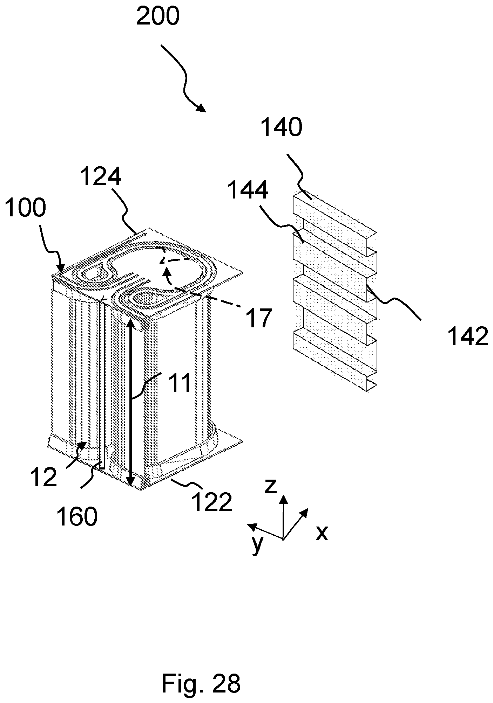

Figur 28 zeigt in Explosionsdarstellung ein weiteres Ausführungsbeispiel der Erfindung. Hier umfasst eine Abscheideeinheit 200 eine einzige Abscheidestufe 100.

In diesem Ausführungsbeispiel umfasst die Abscheidestufe 100 beispielhaft nur ein einziges Abscheidesegment. Die Abscheidestufe 100 weist ferner vor dem freien Strömungsquerschnitt am Eintritt des Fluids in die Beschleunigungsstrecke ein Leitelement 160 auf.

Die Filterstufe 140 weist einen gefalteten Filterbalg 142 auf, dessen Faltenkanten 144 in Richtung der y-Achse und damit quer zur sich in Richtung der z-Achse erstreckenden Ausdehnung 11 der Beschleunigungsstrecke orientiert sind. Würde die Abscheideeinheit 200 beispielsweise um die x-Achse verkippt, ist es vorteilhaft, die relative Orientierung der Faltenkanten 144 der Filterstufe 140 quer zu der Ausdehnung 11 der Beschleunigungsstrecke 12 zu erhalten.

Das Leitelement 160 erstreckt sich in einer Symmetrieebene des freien Strömungsquerschnitts am Eintritt des Fluids in die Beschleunigungsstrecke vom Bodenteil 122 bis zum Deckelteil 124 entlang der Hochachse z. Das Leitelement 160 weist in diesem Beispiel eine Ausdehnung auf, welche parallel zur z-Achse ist.

Das Leitelement 160 ist in diesem Beispiel gegen die Strömungsrichtung spitz zulaufend ausgebildet mit einem beispielsweise V-förmigen Querschnitt. Das Leitelement 160 kann zur Geräuschminimierung bei der Durchströmung der Abscheideeinheit 200 dienen.

Das Leitelement 160 kann lösbar von der Abscheideeinheit 200 vorgesehen sein und bei Bedarf aus der Abscheideeinheit 200 entfernt werden.

Das Leitelement 160 kann die Durchströmung so beeinflussen, dass eine Geräuschentwicklung reduziert oder weitgehend unterdrückt werden kann.

Durch geeignete Positionierung und/oder Formgebung des Leitelements 160 kann dieses eine Verwirbelung des einströmenden Fluids, beispielsweise einströmender Luft, und/oder eine Reflexion des hinter der Beschleunigungsstrecke 12 entstehenden Schalls hervorrufen.

In einem alternativen Beispiel kann der Querschnitt des gegenüber der Beschleunigungsstrecke 12 liegenden Bereichs des Prallbereichs 14 (s. z.B. Figuren 4 und 8) spitz ausgebildet sein, so dass eine Spitze 17 des Prallbereichs 14 gegen die Strömung gerichtet ist. Dies ist in der Figur mit einer unterbrochenen Linie am Deckelteil 124 angedeutet.

Das Leitelement 160 kann als einteiliges Zusatzelement vorgesehen sein, das beim Aufbau der Abscheideeinheit 106 hinzugefügt oder bedarfsweise weggelassen werden kann.

Die beiden Stufen 100, 140 können wahlweise in einem einzigen Gehäuse oder in zwei getrennten Gehäusen angeordnet sein.

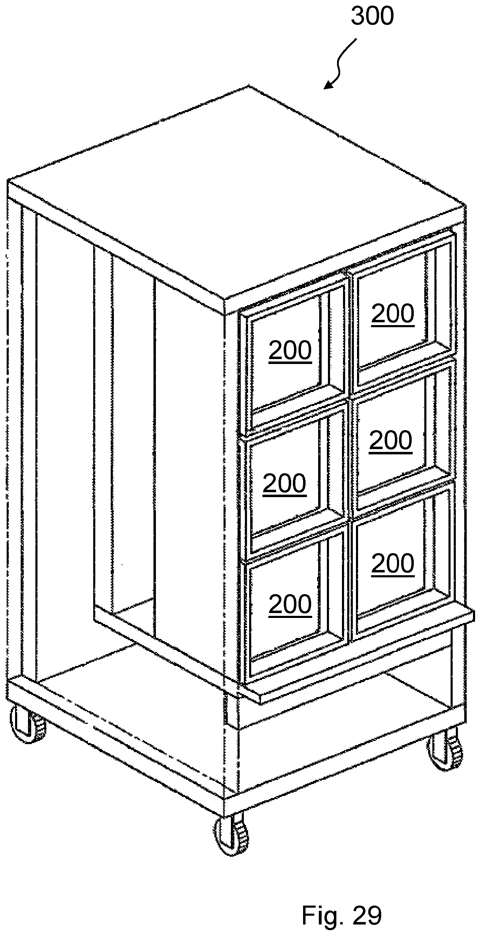

Figur 29 zeigt eine isometrische Ansicht eines Transportwagens 300, in dem eine Mehrzahl von austauschbaren Abscheideeinheiten 200 eingesetzt sind. Diese sind modular angeordnet und können bei Bedarf einzeln oder insgesamt aus dem Transportwagen 300 entfernt werden. Da die beladenen Abscheideeinheiten 200 ein hohes Gewicht aufweisen, kann der Transportwagen 300 mit beladenen Abscheideeinheiten 200 bequem von einer Beschichtungsanlage entfernt und mit unbeladenen Abscheideeinheiten 200 wieder angekoppelt werden.

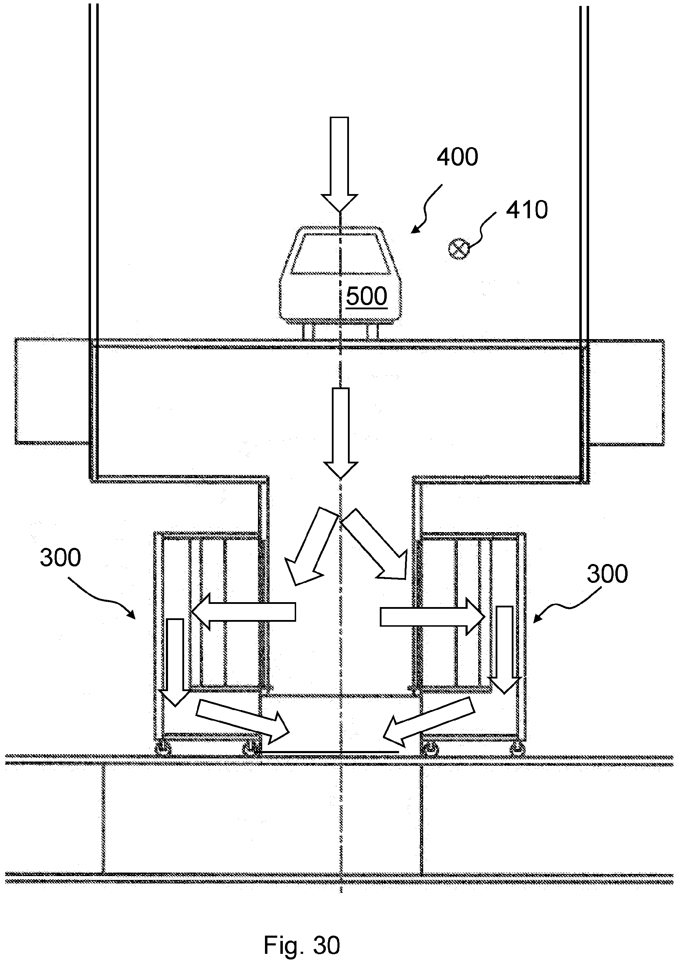

Figur 30 zeigt eine schematische Ansicht einer Beschichtungsanlage 400 mit mehreren Transportwagen 300 nach Figur 29. Die Transportwagen 300 können beispielsweise zu beiden Seiten der Beschichtungsanlage 400 angeordnet sein.

Die Beschichtungsanlage 400 dient beispielsweise zur Lackierung von Karosserien 500. Die Karosserie 500 ist auf einer Arbeitsplattform angeordnet und wird mit Lack besprüht, während sie in Transportrichtung 410 bewegt wird, die in der Figur senkrecht zur Zeichenebene verläuft. Der Luftstrom mit Lackresten strömt in der Beschichtungsanlage 400 nach unten und durchströmt die zu beiden Seiten angeordneten Transportwagen 300. Es versteht sich, dass eine Mehrzahl von Transportwagen 300 mit Abscheideeinheiten 200 von der lackbeladenen Luft parallel durchströmt werden können, wobei die Mehrzahl von Transportwagen 300 auch auf nur auf einer Seite der Beschichtungsanlage 400 angeordnet sein können. Die Transportwagen 300 bilden eine fluidführende Verbindung zu einem Abluftkanal. Die lackbeladene Luft strömt durch die Abscheideeinheiten 200 der Transportwagen 300 und gelangt gereinigt an dessen Ausgang und in den Abluftkanal. Die gereinigte Abluft kann wiederum für den Lackierprozess eingesetzt werden und im Kreislauf geführt werden oder aus der Lackieranlage 400 abgeführt werden. Die beweglichen Transportwagen 300 können bei laufender Produktion in der Beschichtungsanlage 400 ausgetauscht werden.

## Patentansprüche

1. Abscheidestufe (100) zur Trägheitsabscheidung von in einem durchströmenden Fluid enthaltenen Komponenten, insbesondere Lackpartikel und/oder Lackagglomerate,
wobei wenigstens ein Abscheidesegment vorgesehen ist, das eingangsseitig wenigstens eine Beschleunigungsstrecke (12) für das Fluid aufweist, in welcher das Fluid in einer Durchströmungsrichtung (102) beschleunigt wird, und dass der Beschleunigungsstrecke (12) eine erste Abschlagfläche (13) für im Fluid enthaltene Komponenten nachgeschaltet ist,
**dadurch gekennzeichnet, dass**
der ersten Abschlagfläche (13) eine zweite Abschlagfläche (18) nachgeschaltet ist, welche eine Rückseite einer Begrenzungswand der Beschleunigungsstrecke (12) ist, wobei die Innenseite der Beschleunigungsstrecke (12) zur Beschleunigung des Fluids und die Außenseite als gekrümmter Abschnitt (22) der Beschleunigungsstrecke (12) als zweite Abschlagfläche (18) dient,
wobei die erste Abschlagfläche (13) einen Prallbereich (14) und einen in Strömungsrichtung folgenden gekrümmten Abschnitt (15) zur Richtungsumlenkung des Fluids um mehr als 270° zur Durchströmungsrichtung (102) des Fluids in der Beschleunigungsstrecke (12) aufweist,
wobei eine Endkante (21, 24) des gekrümmten Abschnitts (15) der ersten Abschlagsfläche (13) auf die zweite Abschlagfläche (18) gerichtet ist,
und wobei der gekrümmte Abschnitt (15) mit einem konstanten oder einem kleiner werdenden Krümmungsradius gekrümmt ist.

2. Abscheidestufe nach Anspruch 1, **dadurch gekennzeichnet, dass** der dem Prallbereich (14) die erste Abschlagfläche (13) entlang des gekrümmten Abschnitts (15) durchgehend ausgebildet ist.

3. Abscheidestufe nach Anspruch 1 oder 2, **dadurch gekennzeichnet, dass** der Prallbereich (14) dem austrittseitigem Ende (16) der Beschleunigungsstrecke (12) gegenüberliegt und ein Abstand (L1) zwischen dem engsten Querschnitt und dem Prallbereich (14), mindestens die Hälfte einer Breite (B1) der Beschleunigungsstrecke (12) im engsten Querschnitt beträgt.

4. Abscheidestufe nach einem der vorhergehenden Ansprüche, **dadurch gekennzeichnet, dass** ein Verhältnis einer freien Einströmfläche im engsten Querschnitt der Beschleunigungsstrecke (12) zur Anströmfläche (10) im Bereich von 1:4 bis 1:10 liegt, insbesondere im Bereich von 1:6 bis 1:8 liegt,
und/oder
dass ein Verhältnis einer Breite (B2) zu einer Tiefe (L2) der Abschlagfläche (13) mindestens bei 1:2, vorzugsweise zwischen 1:2 und 3:1 liegt, besonders bevorzugt bei 2:1 liegt.

5. Abscheidestufe nach einem der vorhergehenden Ansprüche, **dadurch gekennzeichnet, dass** der gekrümmte Abschnitt (22) der zweiten Abschlagfläche (18) eine dem ersten gekrümmten Abschnitt (12) entgegengesetzte Krümmung aufweist,
insbesondere,
dass die zweite Abschlagfläche (18) eine Außenwandung zur Führung des Fluids ist.

6. Abscheidestufe nach Anspruch 5, **dadurch gekennzeichnet, dass** strömungsmäßig nach der zweiten Abschlagfläche (18) eine Wandung (28) quer zur Überströmungsrichtung am Ende des gekrümmten Abschnitts (22) angeordnet ist.

7. Abscheidestufe nach einem der vorhergehenden Ansprüche, **dadurch gekennzeichnet, dass** das Fluid am Prallbereich (14) der Abschlagfläche (13) in Teilströme mit unterschiedlicher Umlenkrichtung aufteilbar ist, insbesondere wobei die Teilströme mit unterschiedlicher Umlenkrichtung aufteilbar sind.

8. Abscheidestufe nach einem der vorhergehenden Ansprüche, **dadurch gekennzeichnet, dass** der gekrümmte Abschnitt (15) der ersten Abschlagfläche (13) ausgangsseitig einen Innenradius (R2) aufweist,
insbesondere, dass der Innenradius (R2) wenigstens überwiegend konstant ist und mindestens ein Viertel einer Breite eines freien Strömungsquerschnitts am ausgangsseitigen Ende des gekrümmten Abschnitts (15) ist,
oder
insbesondere, dass der Innenradius (R2) veränderlich ist und wenigstens abschnittsweise mindestens ein Viertel einer Breite eines freien Strömungsquerschnitts am ausgangsseitigen Ende des gekrümmten Abschnitts (15) ist.

9. Abscheidestufe nach einem der vorhergehenden Ansprüche, **dadurch gekennzeichnet, dass** an einer oder mehreren überströmten Innenradien und/oder an einer oder mehreren Endkanten überströmter Wandungen ein oder mehrere Fangnischen (30, 32) angeordnet sind, welche zur Überströmungsrichtung hin geöffnet sind und/oder dass Oberflächen überströmter Wandungen eine dreidimensionale Struktur, vorzugsweise eine Wellenstruktur, und/oder eine oder mehrere Vertiefungen und/oder eine erhöhte Rauigkeit, aufweisen.

10. Abscheidestufe nach einem der vorhergehenden Ansprüche, **dadurch gekennzeichnet, dass** mehrere Beschleunigungsstrecken (12) nebeneinander angeordnet und parallel durchströmbar sind, insbesondere, dass Beschleunigungsstrecken (12) und jeweils zugeordnete erste Abschlagflächen (13) durch eine Wandung (28) voneinander separiert sind.

11. Abscheidestufe nach einem der vorhergehenden Ansprüche, **dadurch gekennzeichnet, dass** Abschlagfläche (13, 18) und/oder Beschleunigungsstrecke (12) aus Karton und/oder Wellpappe und/oder Faserformteilen und/oder Tiefziehteilen gebildet sind.

12. Abscheideeinheit (200) mit wenigstens einer Abscheidestufe (100) nach einem der vorhergehenden Ansprüche, wobei die Abscheidestufe (100) wenigstens ein Abscheidesegment aufweist, das eingangsseitig wenigstens eine Beschleunigungsstrecke (12) für das Fluid aufweist, in welcher das Fluid in einer Durchströmungsrichtung (102) beschleunigt wird, und wobei der Beschleunigungsstrecke (12) eine erste Abschlagfläche (13) für im Fluid enthaltene Komponenten nachgeschaltet ist, **dadurch gekennzeichnet, dass** die wenigstens eine Abscheidestufe (100) in einem Gehäuse (150) angeordnet ist.

13. Abscheideeinheit nach Anspruch 12, **dadurch gekennzeichnet, dass** mehrere Abscheidestufen (100) strömungsmäßig parallel und/oder in Serie durchströmbar angeordnet sind.

14. Abscheideeinheit nach Anspruch 12 oder 13, **dadurch gekennzeichnet, dass** vor oder im freien Strömungsquerschnitt der Beschleunigungsstrecke (12) ein Leitelement (160) angeordnet ist, insbesondere, dass das Leitelement (160) sich parallel zur Anströmfläche (10) der Abscheidestufe (100) erstreckt und/oder dass das Leitelement (160) in einer Symmetrieebene des freien Strömungsquerschnitts angeordnet ist, und/oder dass das Leitelement (160) einen zweidimensionalen Querschnitt, insbesondere einen gewinkelten oder gekrümmten Querschnitt, aufweist.

15. Abscheideeinheit nach einem der Ansprüche 12 bis 14, **dadurch gekennzeichnet, dass** wenigstens eine Filterstufe (140) stromab wenigstens einer der Abscheidestufen (100) angeordnet ist, insbesondere nach der letzten Abscheidestufe (100), insbesondere, dass die wenigstens eine Filterstufe (140) einen gefalteten Filterbalg (142) aufweist, dessen Faltenkanten (144) quer zu einer sich parallel zu einer z-Achse erstreckenden Ausdehnung (11) der Beschleunigungsstrecke (12) orientiert sind.

16. Abscheideeinheit nach einem der Ansprüche 12 bis 15, **dadurch gekennzeichnet, dass** die wenigstens eine Abscheidestufe (100) und eine oder mehrere Filterstufen (140) in einem gemeinsamen Gehäuse (150) angeordnet sind.

17. Abscheideeinheit nach einem der Ansprüche 12 bis 16, **dadurch gekennzeichnet, dass** ein Bodenteil (122) und/oder Deckelteil (124) eine Negativkontur in Form eines zu durchströmenden Querschnitts einer oder mehrerer Abscheidestufen (100) als Halterung für die Abscheidestufen (100) aufweisen, insbesondere, dass die Negativkontur als unterbrochene Öffnungen im Bodenteil (122) und/oder Deckelteil (124) ausgebildet ist.

18. Abscheideeinheit nach einem der Ansprüche 12 bis 17, **dadurch gekennzeichnet, dass** die Abscheidestufen (100) aus einem Bausatz (109) von Bauteilen (110, 112, 122, 124, 130, 132, 134) gebildet sind, insbesondere aus Zuschnitten aus Karton und/oder Wellpappe und/oder Faserformteilen und/oder Tiefziehteilen aus Kunststoff, insbesondere, dass die Zuschnitte vordefinierte Knicklinien und/oder Falzlinien aufweisen.

19. Bausatz (109) zur Herstellung wenigstens einer Abscheidestufe (100) nach einem der Ansprüche 1 bis 11 und/oder einer Abscheideeinheit (200) nach einem der Ansprüche 12 bis 18, **dadurch gekennzeichnet, dass** Bauteile (110, 112, 122, 124, 130, 132, 134) aus Zuschnitten aus Karton und/oder Wellpappe und/oder Faserformteilen und/oder Tiefziehteilen aus Kunststoff gebildet sind, die in eine Endform biegbar oder knickbar sind und/oder ineinander steckbar sind.

20. Bausatz nach Anspruch 19, **dadurch gekennzeichnet, dass** ein Bodenteil (122) und/oder Deckelteil (124) eine Negativkontur in Form eines zu durchströmenden Querschnitts einer oder mehrerer Abscheidestufen (100) als Halterung für die Abscheidestufen (100) aufweisen.

21. Transportwagen (300) mit wenigstens einer Abscheideeinheit (200) nach einem der Ansprüche 12 bis 18, **gekennzeichnet durch** eine verfahrbare oder verschiebbare Ausgestaltung zum Ankoppeln an eine Beschichtungsanlage (400), insbesondere, dass die wenigstens eine Abscheideeinheit (200) austauschbar angeordnet vorgesehen ist.

22. Beschichtungsanlage (400) mit einem oder mehreren Transportwagen (300) nach Anspruch 21, **dadurch gekennzeichnet, dass** wenigstens ein Transportwagen (300) zur Bildung einer fluidführenden Verbindung zu einem Abluftkanal vorgesehen ist.

23. Beschichtungsanlage nach Anspruch 22, **dadurch gekennzeichnet, dass** eine Mehrzahl von Transportwagen (300) parallel ankoppelbar vorgesehen ist.

24. Verfahren zur Herstellung einer Abscheideeinheit (200) nach einem der Ansprüche 12 bis 18 mit wenigstens einer Abscheidestufe (100) nach einem der Ansprüche 1 bis 11, wobei
ein Bausatz (109) aus Bauteilen (110, 112, 122, 124, 130, 132, 134) bereitgestellt wird, insbesondere aus Zuschnitten aus Karton und/oder Wellpappe und/oder Faserformteilen und/oder Tiefziehteilen aus Kunststoff;
Bauteile (110, 112, 122, 124, 130, 132, 134) aus dem Bausatz (109) entnommen werden;
Bauteile (110, 112) zur Bildung wenigstens einer Anströmfläche (10), wenigstens einer Beschleunigungsstrecke (12) und wenigstens einer Abschlagfläche (13, 18) geformt werden;
die geformten Bauteile (110, 112) in eine entsprechende Negativform von Bodenteil (122) und/oder Deckelteil (124) gesteckt werden;
der Zusammenbau aus der wenigstens einen Anströmfläche (10), der wenigstens einen Beschleunigungsstrecke (12) und der wenigstens einen Abschlagfläche (13, 18) mit Bodenteil (122) und Deckelteil (124) in ein Gehäuse (150) eingesetzt wird.

25. Verfahren nach Anspruch 24, wobei wenigstens eine Filterstufe (140) in Durchströmungsrichtung (102) stromab der wenigstens einen Abscheidestufe in das Gehäuse (150) eingesetzt wird.

## Claims

1. Separating stage (100) for inertial separation of components contained in a fluid flowing through it, in particular paint particles and/or paint agglomerates,
wherein at least one separating segment is provided which has on the inlet side at least one acceleration section (12) for the fluid, in which the fluid is accelerated in a through-flow direction (102), and in that a first impaction surface (13) for components contained in the fluid is arranged downstream of the acceleration section (12),
**characterised in that**
a second impaction surface (18) is arranged downstream of the first impaction surface (13), which second impaction surface is a rear side of a boundary wall of the acceleration section (12), wherein the inner side of the acceleration section (12) serves for acceleration of the fluid and the outer side serves as a curved portion (22) of the acceleration section (12) as the second impaction surface (18),
wherein the first impaction surface (13) has a baffle region (14) and a curved portion (15) following in the flow direction for deflecting the direction of the fluid by more than 270° with respect to the through-flow direction (102) of the fluid in the acceleration section (12),
wherein an end edge (21, 24) of the curved portion (15) of the first impaction surface (13) is oriented towards the second impaction surface (18), and wherein the curved portion (15) is curved with a constant or decreasing radius of curvature.

2. Separating stage according to claim 1, **characterised in that** the baffle region (14) has the first impaction surface (13) formed continuously along the curved section (15).

3. Separating stage according to claim 1 or 2, **characterised in that** the baffle region (14) lies opposite the outlet-side end (16) of the acceleration section (12) and a distance (L1) between the narrowest cross-section and the baffle region (14) is at least half a width (B1) of the acceleration section (12) in the narrowest cross-section.

4. Separating stage according to any one of the preceding claims, **characterised in that** a ratio of a free inflow surface in the narrowest cross-section of the acceleration section (12) to the incident flow surface (10) is in the range from 1:4 to 1:10, in particular in the range from 1:6 to 1:8, and/or
**in that** a ratio of a width (B2) to a depth (L2) of the impaction surface (13) is at least 1:2, preferably between 1:2 and 3:1, most preferably 2:1.

5. Separating stage according to any one of the preceding claims, **characterised in that** the curved portion (22) of the second impaction surface (18) has a curvature opposite to that of the first curved portion (12),
in particular
**in that** the second impaction surface (18) is an outer wall for guiding the fluid.

6. Separating stage according to claim 5, **characterised in that**, in terms of flow, downstream of the second impaction surface (18), a wall (28) is arranged transversely to the direction of overflow at the end of the curved portion (22).

7. Separating stage according to any one of the preceding claims, **characterised in that** the fluid at the baffle region (14) of the impaction surface (13) can be divided into partial flows with different deflection directions, in particular wherein the partial flows with different deflection directions can be divided.

8. Separating stage according to any one of the preceding claims, **characterised in that** the curved portion (15) of the first impaction surface (13) has an inner radius (R2) on the outlet side, in particular that the inner radius (R2) is at least predominantly constant and is at least a quarter of a width of a free flow cross-section at the outlet-side end of the curved portion (15),
or
in particular **in that** the inner radius (R2) is variable and is, at least in sections, at least a quarter of a width of a free flow cross-section at the outlet end of the curved portion (15).

9. Separating stage according to any one of the preceding claims, **characterised in that** one or more trapping niches (30, 32) are arranged on one or more overflowed inner radii and/or on one or more end edges of overflowed walls, which trapping niches are open towards the overflow direction and/or **in that** surfaces of overflowed walls have a three-dimensional structure, preferably a wave structure, and/or one or more depressions and/or an increased roughness.

10. Separating stage according to any one of the preceding claims, **characterised in that** a plurality of acceleration sections (12) are arranged next to one another and can be flowed through in parallel, in particular **in that** acceleration sections (12) and respectively associated first impaction surfaces (13) are separated from one another by a wall (28).

11. Separating stage according to any one of the preceding claims, **characterised in that** the impaction surface (13, 18) and/or acceleration section (12) are formed from cardboard and/or corrugated cardboard and/or moulded fibre parts and/or deep-drawn parts.

12. Separating unit (200) having at least one separating stage (100) according to any one of the preceding claims, wherein the separating stage (100) has at least one separating segment which has on the inlet side at least one acceleration section (12) for the fluid, in which the fluid is accelerated in a through-flow direction (102), and wherein a first impaction surface (13) for components contained in the fluid is arranged downstream of the acceleration section (12), **characterised in that** the at least one separating stage (100) is arranged in a housing (150).

13. Separating unit according to claim 12, **characterised in that** a plurality of separating stages (100) are arranged so that flow can pass through them in parallel and/or in series.

14. Separating unit according to claim 12 or 13, **characterised in that** a guide element (160) is arranged in front of or in the free flow cross-section of the acceleration section (12), in particular **in that** the guide element (160) extends parallel to the incident flow surface (10) of the separating stage (100) and/or **in that** the guide element (160) is arranged in a plane of symmetry of the free flow cross-section, and/or **in that** the guide element (160) has a two-dimensional cross-section, in particular an angled or curved cross-section.

15. Separating unit according to any one of claims 12to 14, **characterised in that** at least one filter stage (140) is arranged downstream of at least one of the separating stages (100), in particular downstream of the last separating stage (100), in particular **in that** the at least one filter stage (140) has a folded filter bellows (142), the folded edges (144) of which are oriented transversely to an extension (11) of the acceleration section (12) extending in parallel to a z-axis.

16. Separating unit according to any one of claims 12 to 15, **characterised in that** the at least one separating stage (100) and one or more filter stages (140) are arranged in a common housing (150).

17. Separating unit according to any one of claims 12 to 16, **characterised in that** a bottom part (122) and/or cover part (124) have a negative contour in the form of a cross-section, to be flowed through, of one or more separating stages (100) as a holder for the separating stages (100), in particular **in that** the negative contour is formed as interrupted openings in the bottom part (122) and/or cover part (124).

18. Separating unit according to any one of claims 12 to 17, **characterised in that** the separating stages (100) are formed from a kit (109) of components (110, 112, 122, 124, 130, 132, 134), in particular from blanks made of cardboard and/or corrugated cardboard and/or moulded fibre parts and/or deep-drawn parts made of plastic, in particular **in that** the blanks have predefined buckle lines and/or fold lines.

19. Kit (109) for producing at least one separating stage (100) according to any one of claims 1 to 11 and/or a separating unit (200) according to any one of claims 12 to 18, **characterised in that** components (110, 112, 122, 124, 130, 132, 134) are formed from blanks made of cardboard and/or corrugated cardboard and/or moulded fibre parts and/or deep-drawn parts made of plastic, which can be bent or buckled into a final shape and/or can be fitted into one another.

20. Kit according to claim 19, **characterised in that** a bottom part (122) and/or cover part (124) have a negative contour in the form of a cross-section, to be flowed through, of one or more separating stages (100) as a holder for the separating stages (100).

21. Transport carriage (300) having at least one separating unit (200) according to any one of claims 12 to 18, **characterised by** a movable or displaceable design for coupling to a coating system (400), in particular in that the at least one separating unit (200) is provided in an exchangeably arranged manner.

22. Coating system (400) having one or more transport carriages (300) according to claim 21, **characterised in that** at least one transport carriage (300) is provided for forming a fluid-conducting connection to an exhaust air duct.

23. Coating system according to claim 22, **characterised in that** a plurality of transport carriages (300) are provided so that they can be coupled in parallel.

24. Method for producing a separating unit (200) according to any one of claims 12 to 18, having at least one separating stage (100) according to any one of claims 1 to 11, wherein
a kit (109) of components (110, 112, 122, 124, 130, 132, 134) is provided, in particular of blanks made of cardboard and/or corrugated cardboard and/or moulded fibre parts and/or deep-drawn parts made of plastic;
components (110, 112, 122, 124, 130, 132, 134) can be removed from the kit (109);
components (110, 112) are formed to form at least one incident flow surface (10), at least one acceleration section (12) and at least one impaction surface (13, 18);
the formed components (110, 112) are inserted into a corresponding negative mould of the bottom part (122) and/or cover part (124);
the assembly of the at least one incident flow surface (10), the at least one acceleration section (12) and the at least one impaction surface (13, 18) having a bottom part (122) and cover part (124) is inserted into a housing (150).

25. Method according to claim 24, wherein at least one filter stage (140) is inserted into the housing (150) in the through-flow direction (102) downstream of the at least one separating stage.

## Revendications

1. Niveau de séparation (100) destiné à la séparation par inertie de composants contenus dans un fluide s'y écoulant, en particulier des particules de peinture et/ou des agglomérats de peinture,
dans lequel au moins un segment de séparation est prévu, qui présente côté entrée au moins une section d'accélération (12) pour le fluide, dans laquelle le fluide est accéléré dans une direction d'écoulement (102), et en ce que la section d'accélération (12) est montée en aval d'une première surface d'impact (13) pour les composants contenus dans le fluide,
**caractérisé en ce que**
une seconde surface d'impact (13) est montée en aval de la première surface d'impact (18), laquelle seconde surface d'impact est un côté arrière d'une paroi de délimitation de la section d'accélération (12), dans lequel le côté intérieur de la section d'accélération (12) sert à accélérer le fluide et le côté extérieur sert en tant que portion incurvée (22) de la section d'accélération (12) en tant que seconde surface d'impact (18),
dans lequel la première surface d'impact (13) présente une zone de déflecteur (14) et une portion incurvée (15) suivant dans la direction d'écoulement pour une déviation de la direction du fluide supérieure à 270° par rapport à la direction d'écoulement (102) du fluide dans la section d'accélération (12),
dans lequel un bord d'extrémité (21, 24) de la portion incurvée (15) de la première surface d'impact (13) est dirigé vers la seconde surface d'impact (18), et dans lequel la portion incurvée (15) est incurvée avec un rayon de courbure constant ou décroissant.

2. Niveau de séparation selon la revendication 1, **caractérisé en ce que** la zone de déflecteur (14) de la première surface d'impact (13) est formée de manière continue le long de la portion incurvée (15).

3. Niveau de séparation selon la revendication 1 ou 2, **caractérisé en ce que** la zone de déflecteur (14) se situe à l'opposé de l'extrémité côté sortie (16) de la section d'accélération (12) et une distance (L1) entre la section transversale la plus étroite et la zone de déflecteur (14) vaut au moins la moitié d'une largeur (B1) de la section d'accélération (12) dans la section transversale la plus étroite.

4. Niveau de séparation selon l'une quelconque des revendications précédentes, **caractérisé en ce qu'**un rapport d'une surface d'afflux libre dans la section transversale la plus étroite de la section d'accélération (12) par rapport à la surface d'arrivée d'écoulement (10) se situe dans une plage allant de 1:4 à 1:10, en particulier dans la plage allant de 1:6 à 1:8, et/ou
**en ce qu'**un rapport d'une largeur (B2) sur une profondeur (L2) de la surface d'impact (13) est d'au moins 1:2, de préférence entre 1:2 et 3:1, le plus préférentiellement est de 2:1.

5. Niveau de séparation selon l'une quelconque des revendications précédentes, **caractérisé en ce que** la portion incurvée (22) de la seconde surface d'impact (18) présente une incurvation opposée à celle de la première portion incurvée (12),
en particulier,
**en ce que** la seconde surface d'impact (18) est une paroi extérieure pour diriger le fluide.

6. Niveau de séparation selon la revendication 5, **caractérisé en ce qu'**en termes de communication fluidique, en aval de la seconde surface d'impact (18) une paroi (28) est disposée transversalement par rapport à la direction de débordement au niveau de l'extrémité de la portion incurvée (22).

7. Niveau de séparation selon l'une quelconque des revendications précédentes, **caractérisé en ce que** le fluide au niveau de la zone de déflecteur (14) de la surface d'impact (13) peut être divisé en flux partiels avec différentes directions de déviation, en particulier dans lequel les flux partiels avec différentes directions de déviation peuvent être divisés.

8. Niveau de séparation selon l'une quelconque des revendications précédentes, **caractérisé en ce que** la portion incurvée (15) de la première surface d'impact (13) présente côté sortie un rayon interne (R2), en particulier **en ce que** le rayon interne (R2) est au moins principalement constant et représente au moins un quart d'une largeur d'une section transversale d'écoulement libre au niveau de l'extrémité côté sortie de la portion incurvée (15),
ou
en particulier, **en ce que** le rayon interne (R2) est variable et représente, au moins par sections, au moins un quart d'une largeur d'une section transversale d'écoulement libre au niveau de l'extrémité côté sortie de la portion incurvée (15).

9. Niveau de séparation selon l'une quelconque des revendications précédentes, **caractérisé en ce qu'**au niveau d'un ou plusieurs rayons internes inondés et/ou au niveau d'un ou plusieurs bords d'extrémité de parois inondées sont disposés une ou plusieurs niches de capture (30, 32) qui sont ouvertes vers la direction de débordement et/ou **en ce que** des surfaces de parois inondées présentent une structure tridimensionnelle, de préférence une structure ondulée, et/ou un ou plusieurs évidements et/ou une rugosité accrue.

10. Niveau de séparation selon l'une quelconque des revendications précédentes, **caractérisé en ce que** plusieurs sections d'accélération (12) sont disposées côté à côte et peuvent être traversées en parallèle par un écoulement, en particulier **en ce que** les sections d'accélération (12) et respectivement des premières surfaces d'impact (13) associées sont séparées les unes des autres par une paroi (28).

11. Niveau de séparation selon l'une quelconque des revendications précédentes, **caractérisé en ce que** la surface d'impact (13, 18) et/ou des sections d'accélération (12) sont formées à partir de carton et/ou de carton ondulé et/ou d'articles en fibre moulée et/ou de pièces embouties.

12. Unité de séparation (200) présentant au moins un niveau de séparation (100) selon l'une quelconque des revendications précédentes, dans laquelle le niveau de séparation (100) présente au moins un segment de séparation qui présente côté entrée au moins une section d'accélération (12) pour le fluide, dans laquelle le fluide est accéléré dans une direction d'écoulement (102), et dans laquelle une première surface d'impact (13) pour des composants contenus dans le fluide est montée en aval de la section d'accélération (12), **caractérisée en ce que** le au moins un niveau de séparation (100) est disposé dans un boîtier (150).

13. Unité de séparation selon la revendication 12, **caractérisée en ce que** plusieurs niveaux de séparation (100) sont disposés en parallèle et/ou en série en communication fluidique de manière à pouvoir être traversés par un écoulement.

14. Unité de séparation selon la revendication 12 ou 13, **caractérisée en ce que**, devant ou dans la section transversale d'écoulement libre de la section d'accélération (12), est disposé un élément de guidage (160), en particulier **en ce que** l'élément de guidage (160) s'étend parallèlement à la surface d'arrivée d'écoulement (10) du niveau de séparation (100) et/ou **en ce que** l'élément de guidage (160) est disposé dans un plan de symétrie de la section transversale d'écoulement libre, et/ou **en ce que** l'élément de guidage (160) présente une section transversale bidimensionnelle, en particulier une section transversale présentant un angle ou incurvée.

15. Unité de séparation selon l'une quelconque des revendications 12 à 14, **caractérisée en ce qu'**au moins un niveau de filtration (140) est disposé en aval d'au moins un des niveaux de séparation (100), en particulier en aval du dernier niveau de séparation (100), en particulier **en ce que** le au moins un niveau de filtration (140) présente un soufflet de filtre plié (142) dont les arêtes de pliage (144) sont orientées transversalement à une extension (11) de la section d'accélération (12) s'étendant parallèlement à un axe Z.

16. Unité de séparation selon l'une quelconque des revendications 12 à 15, **caractérisée en ce que** le au moins un niveau de séparation (100) et un ou plusieurs niveaux de filtration (140) sont disposés dans un boîtier (150) commun.

17. Unité de séparation selon l'une quelconque des revendications 12 à 16, **caractérisée en ce qu'**une partie de fond (122) et/ou une partie de couvercle (124) présente(ent) un contour négatif sous la forme d'une section transversale traversée par un écoulement d'un ou plusieurs niveaux de séparation (100) comme support pour les niveaux de séparation (100), en particulier, **en ce que** le contour négatif est conçu comme des ouvertures discontinues dans la partie de fond (122) et/ou la partie de couvercle (124).

18. Unité de séparation selon l'une quelconque des revendications 12 à 17, **caractérisée en ce que** les niveaux de séparation (100) sont formés à partir d'un kit (109) de composants (110, 112, 122, 124, 130, 132, 134), en particulier à partir de pièces découpées en carton et/ou de carton ondulé et/ou d'articles en fibre moulée et/ou de pièces embouties en matière plastique, en particulier **en ce que** les pièces découpées présentent des lignes de pli et/ou des lignes de pliage prédéfinies.

19. Kit (109) pour la fabrication d'au moins un niveau de séparation (100) selon l'une quelconque des revendications 1 à 11 et/ou unité de séparation (200) selon l'une quelconque des revendications 12 à 18, **caractérisé en ce que** les composants (110, 112, 122, 124, 130, 132, 134) sont formés à partir de pièces découpées en carton et/ou de carton ondulé et/ou d'articles en fibre moulée et/ou de pièces embouties en matière plastique, qui peuvent être ployés ou peuvent être pliés dans un moule final et/ou peuvent être enfichés les uns dans les autres.

20. Kit selon la revendication 19, **caractérisé en ce qu'**une partie de fond (122) et/ou une partie de couvercle (124) présentent un contour négatif sous la forme d'une section transversale traversée par un écoulement d'un ou plusieurs niveaux de séparation (100) comme support pour les niveaux de séparation (100).

21. Chariot de transport (300) comprenant au moins une unité de séparation (200) selon l'une quelconque des revendications 12 à 18, **caractérisé par** un agencement mobile ou déplaçable pour le couplage à une installation de revêtement (400), en particulier en ce que la au moins une unité de séparation (200) est prévue pour être disposée de manière interchangeable.

22. Installation de revêtement (400) comprenant un ou plusieurs chariots de transport (300) selon la revendication 21, **caractérisée en ce qu'**au moins un chariot de transport (300) est prévu pour la formation d'une liaison transportant un fluide vers un canal d'évacuation d'air.

23. Installation de revêtement selon la revendication 22, **caractérisée en ce qu'**une pluralité de chariots de transport (300) est prévue de manière à ce qu'ils puissent être couplés en parallèle.

24. Procédé de fabrication d'une unité de séparation (200) selon l'une quelconque des revendications 12 à 18 comprenant au moins un niveau de séparation (100) selon l'une quelconque des revendications 1 à 11, dans lequel
un kit (109) de composants (110, 112, 122, 124, 130, 132, 134) est fourni, en particulier à partir de pièces découpées en carton et/ou de carton ondulé et/ou d'articles en fibre moulée et/ou de pièces embouties en matière plastique ;
des composants (110, 112, 122, 124, 130, 132, 134) sont retirés du kit (109) ;
des composants (110, 112) sont formés pour la formation d'au moins une surface d'arrivée d'écoulement (10), d'au moins une section d'accélération (12) et d'au moins une surface d'impact (13, 18) ;
les composants (110, 112) formés sont placés dans une forme négative correspondante de la partie de fond (122) et/ou de la partie de couvercle (124) ;
l'assemblage à partir de la au moins une surface d'arrivée d'écoulement (10), de la au moins une section d'accélération (12) et de la au moins une surface d'impact (13, 18) avec la partie de fond (122) et la partie de couvercle (124) est inséré dans un boîtier (150).

25. Procédé selon la revendication 24, dans lequel un niveau de filtration (140) est inséré dans le boîtier (150) dans la direction d'écoulement (102) en aval du au moins un niveau de séparation.
